# EUROPEAN PATENT APPLICATION

(11) **EP 3 173 140 A1**
(43) Date of publication of application: **31.05.2017**
(21) Application number: 14900885.6
(22) Date of filing: 25.08.2014
(51) Int. Cl.: B01D 61/04, B01D 65/02

(54) **WATER TREATMENT DEVICE AND OPERATING METHOD FOR SAME**

(71) Applicant: Mitsubishi Heavy Industries, Ltd., Tokyo 108-8215 (JP)
(72) Inventor: ITO, Yoshiaki, Tokyo 108-8215 (JP); IWAHASHI, Hideo, Tokyo 108-8215 (JP); MATSUI, Katsunori, Tokyo 108-8215 (JP); TOKUNAGA, Kiichi, Tokyo 108-8215 (JP); KAWADA, Masanori, Tokyo 108-8215 (JP)
(74) Representative: Henkel, Breuer & Partner
(86) International application number: PCT/JP2014/072139
(87) International publication number: WO 2016/030939

(57) **Abstract**

A water treatment device is provided with: a sub-reverse osmosis membrane device (80S) having a primary casing (81) and a primary reverse osmosis membrane (86s) dividing the inside of the primary casing into a primary liquid passing part (91s) and a primary permeation part (92s); a low pressure water feed pump (11) for pressure feeding seawater (SW) to the primary liquid passing part (91s) at a pressure lower than or equal to the osmotic pressure of the seawater; a main reverse osmosis membrane device (80M) having a secondary casing (81) and a secondary reverse osmosis membrane (86m) dividing the inside of the secondary casing into a secondary liquid passing part (91m) and a secondary permeation part (92m); and a high pressure water feed pump (71) for pressure feeding primary treated liquid (W1), which is the resulting product of seawater passing through the primary liquid passing pan (91s) and flowing out of the primary liquid passing part (91s), to the secondary liquid passing part (91m) at a pressure higher than the osmotic pressure of the primary treated liquid (W1).

## Description

### [Technical Field]

The present invention relates to a water treatment device that removes a solute from a liquid to be treated which is a treating target using a reverse osmosis membrane to obtain a liquid having a low solute concentration, and a method of operating the same.

### [Background Art]

As a water treatment device for obtaining freshwater from seawater or purifying industrial water to obtain clean water, there is a water treatment device equipped with a reverse osmosis membrane device.

In the water treatment device, foreign materials such as organic materials or inorganic materials is adhered to or deposited on a reverse osmosis membrane or the like, and thereby water treatment capability is reduced. When the capability of the water treatment device is reduced, an operation of the water treatment device needs to be temporarily stopped to perform maintenance of the reverse osmosis membrane device. When the operation of the water treatment device is frequently stopped for maintenance or the like of the reverse osmosis membrane device, an output of the freshwater or the clean water is reduced and maintenance expenses are increased. Accordingly, for example, in the technology described in Patent Document 1 below, a disinfectant that kills organisms such as fungi contained in a liquid to be treated is added to the liquid to be treated to prevent the organisms such as fungi from being adhered to a reverse osmosis membrane or the like.

### [Citation List]

### [Patent Document]

### [Patent Document 1]

Japanese Unexamined Patent Application, First Publication No. 2002-143849

### [Summary of Invention]

### [Technical Problem]

In the technology described in Patent Document 1 above, adhesion of fungus to the reverse osmosis membrane or the like can be reliably prevented, and a decrease in water treatment capability can be prevented. However, a technology for further limiting a decrease in water treatment capability and performing water treatment over a long period of time is required.

Accordingly, an object of the present invention is to provide a water treatment device capable of limiting a decrease in water treatment capability and performing water treatment over a long period of time, and a method of operating the same.

### [Solution to Problem]

### [Solution to Problem]

A water treatment device as an aspect according to the invention to achieve the object includes: a sub-reverse osmosis membrane device having a primary casing and a primary reverse osmosis membrane dividing an inside of the primary casing into a primary liquid passing part and a primary permeating part; a low pressure water feeder configured to feed a liquid to be treated, which is a treating target, to the primary liquid passing part at a pressure that is equal to or lower than an osmotic pressure of the liquid to be treated; a main reverse osmosis membrane device having a secondary casing and a secondary reverse osmosis membrane dividing an inside of the secondary casing into a secondary liquid passing part and a secondary permeating part; and a high pressure water feeder configured to feed a primary treated liquid, which is a resultant product of the liquid to be treated passing through the primary liquid passing part and flowing out from the primary liquid passing part, to the secondary liquid passing part at a pressure higher than an osmotic pressure of the primary treated liquid.

In the water treatment device, since foreign materials that can be deposited in the secondary liquid passing part of the main reverse osmosis membrane device are trapped by the sub-reverse osmosis membrane device, a decrease in water treatment capability in the main reverse osmosis membrane device can be limited. In the sub-reverse osmosis membrane device, since the liquid to be treated only passes through the primary liquid passing part without driving reverse osmosis across the primary reverse osmosis membrane, a decrease in the capability of causing an inflow liquid to flow, namely a decrease in treatment capability, can be limited in the sub-reverse osmosis membrane device in comparison with a case in which the liquid to be treated drives reverse osmosis across the primary reverse osmosis membrane in the sub-reverse osmosis membrane device.

Therefore, in the water treatment device, a decrease in water treatment capability can be limited. As a result, water treatment can be performed over a long period of time.

Here, in the water treatment device, the primary casing may be formed with a liquid-to-be-treated inflow port and a primary treated liquid outflow port which communicate the primary liquid passing part and the outside with each other, and a permeated liquid outflow port which communicates the primary permeating part and the outside with each other. The water treatment device may include a liquid-to-be-treated line along which the liquid to be treated from the low pressure water feeder is guided from the liquid-to-be-treated inflow port into the primary liquid passing part, and a primary treated liquid line along which the primary treated liquid passing through the primary liquid passing part is guided from the primary treated liquid outflow port into the secondary liquid passing part via the high pressure water feeder.

The water treatment device in which the primary casing is formed with the permeated liquid outflow port may include a backwashing unit configured to feed a backwashing liquid whose solute concentration is lower than that of the liquid to be treated from the permeated liquid outflow port to the primary permeating part, and a cleaning liquid discharge line configured to discharge a liquid containing the backwashing liquid, which is fed to the primary permeating part, passes through the primary reverse osmosis membrane, and reaches the primary liquid passing part, to the outside via the liquid-to-be-treated line or the primary treated liquid line.

In the water treatment device, the inside of the sub-reverse osmosis membrane device can be backwashed. For this reason, in the water treatment device, even when treatment capability of the sub-reverse osmosis membrane device has decreaseped, the treatment capability can be easily restored.

The water treatment device provided with the backwashing unit may include a switching unit configured to switch an operation state between a normal operation state, in which the liquid to be treated is fed from the liquid-to-be-treated line into the primary liquid passing part via the liquid-to-be-treated inflow port and the primary treated liquid from the primary liquid passing part is fed to the high pressure water feeder via the primary treated liquid line, and a backwashing state in which the liquid containing the backwashing liquid, which is fed from the backwashing unit to the primary permeating part and reaches the primary liquid passing part via the primary reverse osmosis membrane, is discharged from the cleaning liquid discharge line to the outside via the liquid-to-be-treated line or the primary treated liquid line.

In the water treatment device, the operation state of the sub-reverse osmosis membrane device can be easily switched.

In the water treatment device provided with the switching unit, the cleaning liquid discharge line may be connected to the liquid-to-be-treated line. The water treatment device may include a backward passing liquid line that connects the liquid-to-be-treated line and the primary treated liquid line and guides the liquid to be treated passing through the liquid-to-be-treated line from the primary treated liquid outflow port to the primary liquid passing part via the primary treated liquid line. The cleaning liquid discharge line may be connected to the liquid-to-be-treated line at a position closer to the liquid-to-be-treated inflow port side than a position at which the backward passing liquid line is connected. The switching unit may switch the operation state between the normal operation state and the backwashing state, in which the backwashing liquid from the backwashing unit is fed to the primary permeating part, the liquid to be treated is fed from the liquid-to-be-treated line into the primary liquid passing part via the backward passing liquid line, the primary treated liquid line, and the primary treated liquid outflow port, and the liquid to be treated and the backwashing liquid flowing from the liquid-to-be-treated inflow port are discharged from the cleaning liquid discharge line to the outside.

In the sub-reverse osmosis membrane device, many foreign materials are trapped at an upstream portion in the primary liquid passing part, in other words, at a portion of the liquid-to-be-treated inflow port side in the primary liquid passing part, and the many foreign materials are deposited at this portion. In the backwashing state in the water treatment device, the liquid to be treated flows from the primary treated liquid outflow port side to the liquid-to-be-treated inflow port side in the primary liquid passing part, and then flows in a direction opposite to the normal operation state. For this reason, in the water treatment device, the foreign materials deposited in the primary liquid passing part of the sub-reverse osmosis membrane device can be efficiently removed.

Any one of the water treatment devices provided with the switching unit may include a controller configured to instruct the switching unit to switch from the normal operation state to the backwashing state when preset conditions are met.

The water treatment device provided with the controller may include a differential pressure gauge configured to detect a pressure difference between a pressure in the liquid-to-be-treated line and a pressure in the primary treated liquid line at a position of the sub-reverse osmosis membrane device side that is closer thereto than the high pressure water feeder. The controller may instruct the switching unit to switch from the normal operation state to the backwashing state when the pressure difference detected by the differential pressure gauge in the normal operation state is equal to or higher than a preset value.

When an amount of deposition of the foreign materials in the primary liquid passing part of the sub-reverse osmosis membrane device increases, resistance of the liquid to be treated flowing in the primary liquid passing part increases. A pressure difference between a pressure of the liquid to be treated flowing into the liquid-to-be-treated inflow port of the sub-reverse osmosis membrane device and a pressure of the primary treated liquid flowing from the primary treated liquid outflow port is increased, and a flow rate of the liquid passing through the primary liquid passing part is reduced. Thus, in the water treatment device, when the pressure difference between the pressure in the liquid-to-be-treated line and the pressure in the primary treated liquid line at the position of the sub-reverse osmosis membrane device side that is closer thereto than the high pressure water feeder is equal to or higher than the preset value in the normal operation state, the operation state of the sub-reverse osmosis membrane device is switched to the backwashing state. The inside of the sub-reverse osmosis membrane device is backwashed, and the flow rate of the liquid passing through the primary liquid passing part is restored.

In any one of the water treatment devices provided with the backwashing unit, the backwashing unit may have a backwashing liquid tank which is disposed at a higher position than the sub-reverse osmosis membrane device and in which the backwashing liquid is stored, and a backwashing liquid line that connects the backwashing liquid tank and the permeated liquid outflow port.

In the water treatment device, the backwashing liquid in the primary permeating part drives forward osmosis across the primary reverse osmosis membrane depending on positive osmotic pressure and flows into the primary liquid passing part. In the water treatment device, a liquid pressure of a liquid level difference between a liquid level of the backwashing liquid in the backwashing liquid tank and a liquid level of the backwashing liquid in the primary permeating part is applied to the backwashing liquid in the primary permeating part. For this reason, in the water treatment device, even when a pressure of the backwashing liquid is not increased by a pump or the like, air stagnation or the like in the primary permeating part can be prevented. Therefore, in the water treatment device, power consumption caused by backwashing the inside of the sub-reverse osmosis membrane device can be limited.

Any one of the water treatment devices provided with the backwashing unit may include a permeated liquid feed line along which a permeated liquid, which is obtained by the primary treated liquid passing through the secondary reverse osmosis membrane of the main reverse osmosis membrane device, is fed to the backwashing unit as the backwashing liquid.

Since the permeated liquid is very low in solute concentration compared to the liquid to be treated, it is easy to drive forward osmosis across the primary reverse osmosis membrane. Therefore, in the water treatment device, the permeated liquid is used as the backwashing liquid so that the backwashing can be efficiently performed. Moreover, in the water treatment device, since the permeated liquid made by the water treatment device itself is used, the cost for securing the backwashing liquid can be suppressed.

In any one of the water treatment devices, the sub-reverse osmosis membrane device and the main reverse osmosis membrane device may be the same type of reverse osmosis membrane device.

In the water treatment device, since a foreign material deposition characteristic of the sub-reverse osmosis membrane device is the same as that of the main reverse osmosis membrane device, a trapping characteristic in which foreign materials that can be deposited in the secondary liquid passing part of the main reverse osmosis membrane device are trapped by the sub-reverse osmosis membrane device can be enhanced. It is preferable that the primary reverse osmosis membrane and the secondary reverse osmosis membrane are formed of the same material or that a member for securing a flow path of the primary liquid passing part and a member for securing a flow path of the secondary liquid passing part are formed as the same type and of the same material to enhance the trapping characteristic in which foreign materials that can be deposited in the secondary liquid passing part of the main reverse osmosis membrane device are trapped by the sub-reverse osmosis membrane device.

Any one of the water treatment devices may include a disinfectant feeder configured to feed a disinfectant for killing organisms in the primary liquid passing part to the primary liquid passing part.

In the water treatment device, even when organisms such as fungi are propagated in the primary liquid passing part, the organisms can be removed. The disinfectant feeder may feed the disinfectant into the primary liquid passing part and the secondary liquid passing part.

Any one of the water treatment devices may include an acidic agent feeder configured to feed an acidic agent for removing scale in the secondary liquid passing part to the secondary liquid passing part.

In the water treatment device, even when scale is deposited in the secondary liquid passing part, the scale can be removed. The acidic agent feeder may feed the acidic agent into the primary liquid passing part and the secondary liquid passing part.

Any one of the water treatment devices in which the primary casing is formed with the liquid-to-be-treated inflow port and the primary treated liquid outflow port may include a plurality of sub-reverse osmosis membrane devices including the sub-reverse osmosis membrane device. The liquid-to-be-treated line may have a liquid-to-be-treated main line that is connected to the low pressure water feeder and liquid-to-be-treated branch lines that respectively branch off from the liquid-to-be-treated main line to the plurality of sub-reverse osmosis membrane device and are respectively connected to the liquid-to-be-treated inflow ports of the sub-reverse osmosis membrane devices, and the primary treated liquid line may have a primary treated liquid main line that is connected to the high pressure water feeder and primary treated liquid branch lines that respectively branch off from the primary treated liquid main line to the plurality of sub-reverse osmosis membrane device and are respectively connected to the primary treated liquid outflow ports of the sub-reverse osmosis membrane devices.

In the water treatment device, the plurality of sub-reverse osmosis membrane devices are adapted to be disposed in parallel with respect to the liquid to be treated. For this reason, in the water treatment device, when a capability of any one of the plurality of sub-reverse osmosis membrane device is reduced, the other sub-reverse osmosis membrane devices can be kept in the normal operation state while performing a capability restoring treatment of the one sub-reverse osmosis membrane device. For this reason, in the water treatment device, water treatment can be performed over a long period of time.

A method of operating a water treatment device including a plurality of reverse osmosis membrane devices, each of which has a casing, and a reverse osmosis membrane dividing an inside of the casing into a liquid passing part and a permeating part, wherein the casing is formed with first and second ports that communicate the liquid passing part and an outside with each other and a third port that communicates the permeating part and the outside with each other, as an aspect according to the invention to achieve the object includes: a setting process of setting at least one of the plurality of reverse osmosis membrane device as a sub-reverse osmosis membrane device and the remaining reverse osmosis membrane devices as main reverse osmosis membrane devices; a low-pressure water feeding process of feeding a liquid to be treated, which is a treating target, from the first port of the sub-reverse osmosis membrane device into the liquid passing part at a pressure that is equal to or lower than an osmotic pressure of the liquid to be treated; and a high-pressure water feeding process of feeding a primary treated liquid, which is a resultant product of the liquid to be treated passing through the liquid passing part of the sub-reverse osmosis membrane device and flowing out from the second port, from the first ports of the main reverse osmosis membrane devices into the liquid passing parts of the main reverse osmosis membrane devices at a pressure higher than an osmotic pressure of the primary treated liquid.

In the method, since foreign materials that can be deposited in the liquid passing parts of the main reverse osmosis membrane devices are trapped by the sub-reverse osmosis membrane device, a decrease in water treatment capability in the main reverse osmosis membrane devices can be limited. In the sub-reverse osmosis membrane device, since the liquid to be treated only passes through the liquid passing part without driving reverse osmosis across the reverse osmosis membrane, a decrease in the capability of causing an inflow liquid to flow out, namely a decrease in treatment capability, can be limited in the sub-reverse osmosis membrane device in comparison with a case in which the liquid to be treated drives reverse osmosis across the reverse osmosis membrane in the sub-reverse osmosis membrane device.

Therefore, in the method, a decrease in water treatment capability can be limited. As a result, water treatment can be performed over a long period of time.

Here, the method of operating a water treatment device may perform a backwashing process of feeding a backwashing liquid whose solute concentration is lower than that of the liquid to be treated from the third port of the sub-reverse osmosis membrane device to the permeating part and discharging a liquid containing the backwashing liquid, which passes through the reverse osmosis membrane of the sub-reverse osmosis membrane device and reaches the liquid passing part, to the outside.

In the method of operating a water treatment device performing the backwashing process, the backwashing process may feed the liquid to be treated from the second port of the sub-reverse osmosis membrane device into the liquid passing part and discharge the liquid to be treated to the outside via the first port of the sub-reverse osmosis membrane device along with the backwashing liquid that reaches the liquid passing part of the sub-reverse osmosis membrane device.

Any one of the methods of operating a water treatment device performing the backwashing process may perform a switching process of switching an operation state between a normal operation state, in which the low-pressure water feeding process is performed to feed the liquid to be treated into the liquid passing part via the first port of the sub-reverse osmosis membrane device and the high-pressure water feeding process is performed to feed the primary treated liquid, which flows out from the liquid passing part of the sub-reverse osmosis membrane device via the second port of the sub-reverse osmosis membrane device, into the liquid passing part via the first ports of the main reverse osmosis membrane devices, and a backwashing state that is an operation state in which the backwashing process is performed.

The method of operating a water treatment device performing the switching process may perform a pressure difference detecting process of detecting a pressure difference between a pressure of the liquid to be treated flowing in from the first port of the sub-reverse osmosis membrane device and a pressure of the primary treated liquid flowing out from the second port of the sub-reverse osmosis membrane device in the normal operation state. The switching process may include switching from the normal operation state to the backwashing state when the pressure difference detected in the pressure difference detecting process is equal to or higher than a preset value.

In any one of the methods of operating a water treatment device performing the backwashing process, the backwashing process may include using a permeated liquid, which is obtained by the primary treated liquid passing through the reverse osmosis membranes of the main reverse osmosis membrane devices, as the backwashing liquid.

In any one of the methods of operating a water treatment device, the water treatment device may include a plurality of sub-reverse osmosis membrane devices including the sub-reverse osmosis membrane device, and perform the normal operation state in which, when the backwashing process is performed on a first sub-device group of at least one of the plurality of sub-reverse osmosis membrane devices, the liquid to be treated is fed into the liquid passing part via the first ports of a second sub-device group made up of the other sub-reverse osmosis membrane devices, and the primary treated liquid from the liquid passing part is fed to the main reverse osmosis membrane devices under pressure in the high-pressure water feeding process.

### [Advantageous Effects of Invention]

In an aspect of the present invention, it is possible to limit a decrease in water treatment capability and perform water treatment over a long period of time.

### [Brief Description of Drawings]

Fig. 1 is a system diagram of a water treatment device in a first embodiment according to the present invention.
Fig. 2 is a development perspective view of major parts of a reverse osmosis membrane device in the first embodiment according to the present invention.
Fig. 3 is a sectional view taken along line III-III in Fig. 2.
Fig. 4 is a system diagram (a normal operation state) of a primary treatment system in the first embodiment according to the present invention.
Fig. 5 is a system diagram (a backwashing state) of the primary treatment system in the first embodiment according to the present invention.
Fig. 6 is a system diagram (a normal operation state) of a primary treatment system in a second embodiment according to the present invention.
Fig. 7 is a system diagram (a backwashing state) of the primary treatment system in the second embodiment according to the present invention.
Fig. 8 is a system diagram (a normal operation state) of a primary treatment system in a third embodiment according to the present invention.
Fig. 9 is a system diagram (a partial backwashing state) of the primary treatment system in the third embodiment according to the present invention.
Fig. 10 is a system diagram (a normal operation state) of a primary treatment system in a fourth embodiment according to the present invention.
Fig. 11 is a system diagram (a partial backwashing state) of the primary treatment system in the fourth embodiment according to the present invention.

### [Description of Embodiments]

Hereinafter, various embodiments of a water treatment device according to the present invention will be described in detail with reference to the drawings.

### (First embodiment)

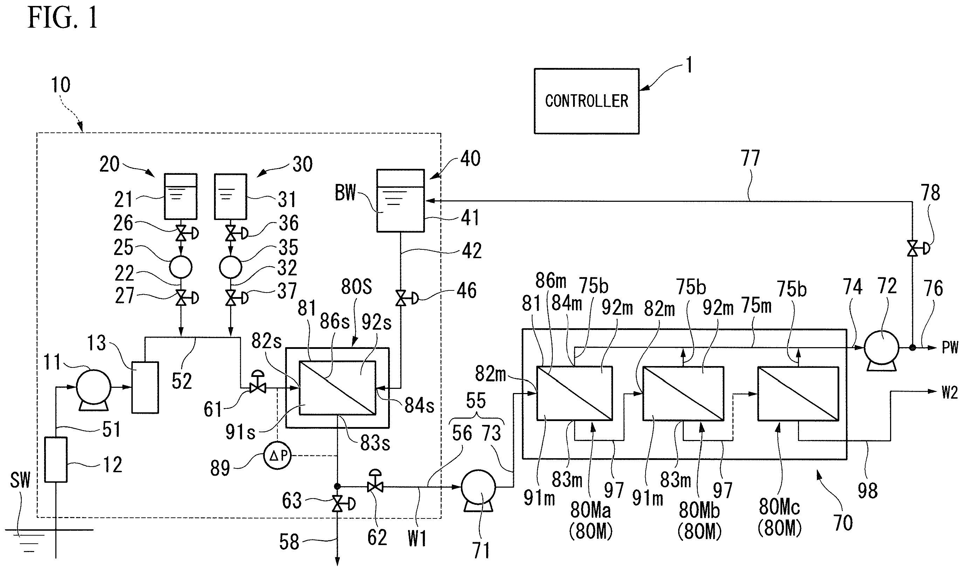

A first embodiment of a water treatment device according to the present invention will be described using Figs. 1 to 5.

The water treatment device of the present embodiment is a device that separates seawater acting as a liquid to be treated into a concentrated liquid and freshwater and obtains the freshwater as treated water. However, in the present invention, the liquid to be treated may not be seawater and, for example, may be river water or industrial waste water.

As shown in Fig. 1, the water treatment device of the present embodiment is provided with a primary treatment system 10 that primarily treats seawater SW, which is the liquid to be treated, to obtain a primary treated liquid W1, a secondary treatment system 70 that secondarily treats the primary treated liquid W1 to obtain a permeated liquid PW, which is freshwater, and a secondary treated liquid S2, which is a concentrated liquid, and a controller 1 that controls operations of various valves or the like in the primary and secondary treatment systems 10 and 70.

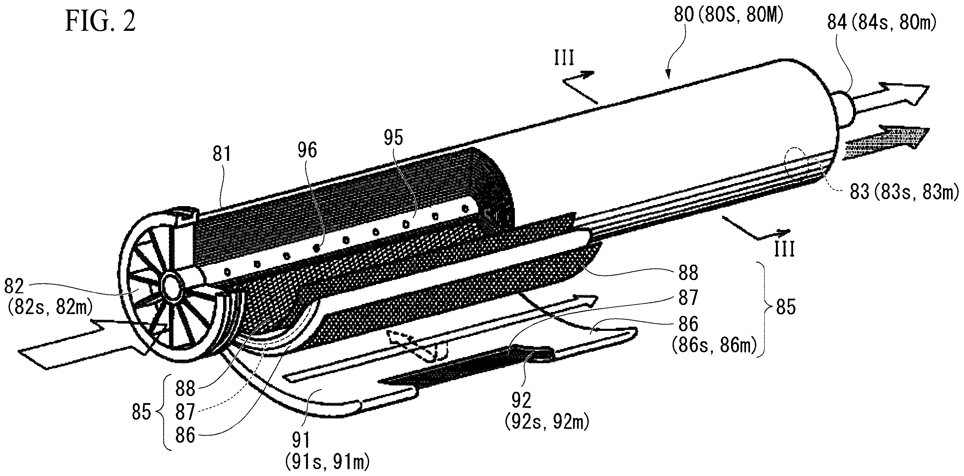

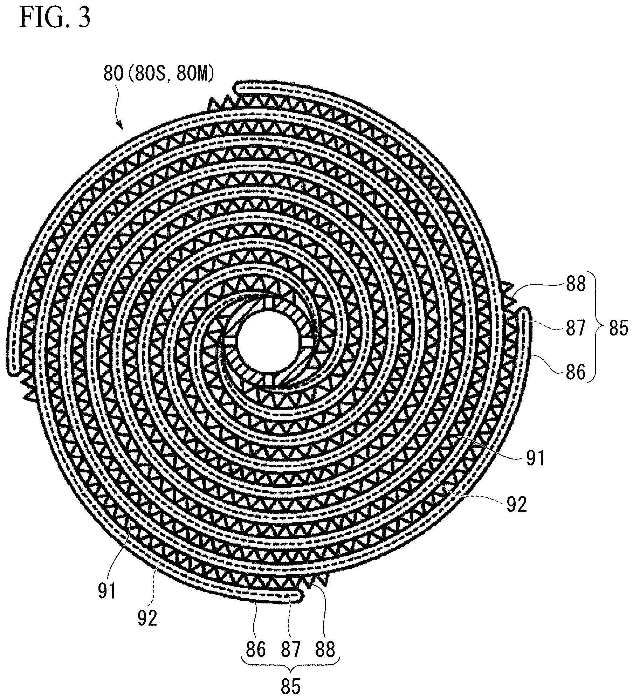

Both the primary treatment system 10 and the secondary treatment system 70 are provided with a reverse osmosis membrane device. A reverse osmosis membrane device 80 is, as shown in Figs. 2 and 3, a spiral type reverse osmosis membrane device, and has a liquid collecting pipe 95, a plurality of membrane units 85 each of which having a reverse osmosis membrane 86, and a cylindrical casing 81 covering the liquid collecting pipe 95 and the plurality of membrane units 85.

A liquid-to-be-treated inflow port (a first port) 82 into which a liquid that becomes a treating target flows is formed at one end of the cylindrical casing 81. A treated liquid outflow port (a second port) 83 from which the treated liquid that does not pass through the reverse osmosis membrane 86 flows out, and a permeated liquid outflow port (a third port) 84 from which a permeated liquid, which is a liquid passing through the reverse osmosis membrane 86, flows out are formed at the other end of the cylindrical casing 81.

The liquid collecting pipe 95 is disposed along a center axis of the cylindrical casing 81. A plurality of liquid collecting holes 96 passing from an outer circumference side to an inner circumference are formed in the liquid collecting pipe 95. An end of the liquid collecting pipe 95 which is close to the other end of the casing 81 is connected to the permeated liquid outflow port 84.

Each of the membrane units 85 has a saclike reverse osmosis membrane 86, a permeated liquid flow path member 87 that is disposed in the saclike reverse osmosis membrane 86 and secures a flow path of a permeated liquid that passes through the reverse osmosis membrane 86, and a mesh spacer 88 that is disposed along an outer surface of the saclike reverse osmosis membrane 86 and secures a flow path of the liquid that is the treating target. Therefore, in the reverse osmosis membrane device 80 of the present embodiment, an inner side of the saclike reverse osmosis membrane 86 constitutes a permeating part 92, and an outer side of the saclike reverse osmosis membrane 86 constitutes a liquid passing part 91.

The plurality of membrane units 85 are wound around the liquid collecting pipe 95 in a spiral shape. An inner portion of the saclike reverse osmosis membrane 86 of each of the membrane units 85 communicates with the liquid collecting holes 96 of the liquid collecting pipe 95. Therefore, the permeating part 92 communicates with the outside via the permeated liquid outflow port 84 of the casing 81. An outer portion of the saclike reverse osmosis membrane 86 of each of the membrane units 85, namely the liquid passing part 91, communicates with the outside via the liquid-to-be-treated inflow port 82 of the casing 81 and via the treated liquid outflow port 83 of the casing 81.

As shown in Fig. 1, the primary treatment system 10 is provided with a sub-reverse osmosis membrane device 80S, which has the same constitution as is the reverse osmosis membrane device 80 described above, in addition to a low pressure water feed pump (a low pressure water feeder) 11 that pumps the seawater SW, which is the liquid to be treated, to feed the seawater SW to the sub-reverse osmosis membrane device 80S under pressure, a strainer 12 that removes foreign materials in the seawater SW which the low pressure water feed pump 11 suctions, a cartridge filter 13 that removes fine foreign materials contained in the seawater SW from the low pressure water feed pump 11, a disinfectant feeder 20 that feeds a disinfectant for killing organisms such as fungi that are present in the seawater SW fed to the sub-reverse osmosis membrane device 80S, an acidic agent feeder 30 that feeds an acidic agent for removing inorganic scale in the sub-reverse osmosis membrane device 80S, and a backwashing unit 40 that backwashes the inside of the sub-reverse osmosis membrane device 80S.

Hereinafter, the casing 81 of the sub-reverse osmosis membrane device 80S is used as a primary casing 81, the reverse osmosis membrane 86 is used as a primary reverse osmosis membrane 86s, the liquid passing part 91 of the sub-reverse osmosis membrane device 80S is used as a primary liquid passing part 91s, the permeating part 92 of the sub-reverse osmosis membrane device 80S is used as a primary permeating part 92s, the liquid-to-be-treated inflow port 82 of the sub-reverse osmosis membrane device 80S is used as a liquid-to-be-treated inflow port 82s, the treated liquid outflow port 83 of the sub-reverse osmosis membrane device 80S is used as a primary treated liquid outflow port 83s, and the permeated liquid outflow port 84 of the sub-reverse osmosis membrane device 80S is used as a permeated liquid outflow port 84s.

A liquid-to-be-treated suction line 51 is connected to a suction port of the low pressure water feed pump 11. The aforementioned strainer 12 is provided for the liquid-to-be-treated suction line 51. A discharge port of the low pressure water feed pump 11 and the liquid-to-be-treated inflow port 82s of the sub-reverse osmosis membrane device 80S are connected by the liquid-to-be-treated discharge line 52. The aforementioned cartridge filter 13 and a liquid-to-be-treated inflow sluice valve 61 are provided for the liquid-to-be-treated discharge line 52 from the low pressure water feed pump 11 side toward the sub-reverse osmosis membrane device 80S side in this order.

The low pressure water feed pump 11 feeds the seawater SW into the primary liquid passing part 91s of the sub-reverse osmosis membrane device 80S at a pressure equal to or lower than an osmotic pressure of the seawater SW at the primary reverse osmosis membrane 86s of the sub-reverse osmosis membrane device 80S. The osmotic pressure of the seawater SW is nearly 30 bars. For this reason, the low pressure water feed pump 11 is operated with a discharge pressure of, for example, about 5 bars.

The disinfectant feeder 20 has a disinfectant tank 21 in which a disinfectant is stored, a disinfectant line 22 that connects the disinfectant tank 21 and the liquid-to-be-treated discharge line 52, and a disinfectant pump 25 that feeds the disinfectant in the disinfectant tank 21 to the liquid-to-be-treated discharge line 52 under pressure. A disinfectant sluice valve 26 is installed on the disinfectant line 22 between the disinfectant tank 21 and the disinfectant pump 25. In addition, a disinfectant flow control valve 27 is installed on the disinfectant line 22 between the disinfectant pump 25 and the liquid-to-be-treated discharge line 52. In the present embodiment, a chlorine-based disinfectant such as hypochlorous acid is used, for example, as the disinfectant. However, any disinfectant may be used as the disinfectant according to a type of liquid to be treated as long as the disinfectant can kill organisms such as fungi.

The acidic agent feeder 30 has an acidic agent tank 31 in which the acidic agent is stored, an acidic agent line 32 that connects the acidic agent tank 31 and the liquid-to-be-treated discharge line 52, and an acidic agent pump 35 that feeds the acidic agent in the acidic agent tank 31 into the liquid-to-be-treated discharge line 52 under pressure. An acidic agent sluice valve 36 is installed on the acidic agent line 32 between the acidic agent tank 31 and the acidic agent pump 35. In addition, an acidic agent flow control valve 37 is installed on the acidic agent line 32 between the acidic agent pump 35 and the liquid-to-be-treated discharge line 52. In the present embodiment, acidic agenta sulfuric acid aqueous solution is used, for example, as the acidic agent. However, when the liquid to be treated is the seawater SW, other chemicals such as hydrochloric acid, nitric acid, etc. may be used as the acidic agent as long as inorganic ions in the seawater SW, for example calcium ions, magnesium ions, etc., can be precipitated to dissolve and remove scale adhered to the reverse osmosis membrane 86.

Both the disinfectant line 22 of the disinfectant feeder 20 and the acidic agent line 32 of the acidic agent feeder 30 are connected to the liquid-to-be-treated discharge line 52 between the cartridge filter 13 and the liquid-to-be-treated inflow sluice valve 61.

The backwashing unit 40 has a backwashing liquid tank 41 in which a backwashing liquid BW is stored, a backwashing liquid line 42 that connects the backwashing liquid tank 41 and the permeated liquid outflow port 84s of the sub-reverse osmosis membrane device 80S, and a backwashing liquid sluice valve 46 that is installed on the backwashing liquid line 42. The backwashing liquid tank 41 is provided at a position higher than the sub-reverse osmosis membrane device 80S.

A primary treated liquid line 55 along which the primary treated liquid W1 flowing out from the primary treated liquid outflow port 83s is guided to the secondary treatment system 70 is connected to the primary treated liquid outflow port 83s of the sub-reverse osmosis membrane device 80S. A cleaning liquid discharge line 58 is connected to the primary treated liquid line 55. A cleaning liquid sluice valve 63 is installed on the cleaning liquid discharge line 58. A primary treated liquid sluice valve 62 is installed on the primary treated liquid line 55 at the secondary treatment system 70 side to be closer thereto than a position at which the cleaning liquid discharge line 58 is connected.

The primary treatment system 10 is provided with a differential pressure gauge 89 that detects a pressure difference ΔP between a pressure of the seawater SW flowing into the primary liquid passing part 91s of the sub-reverse osmosis membrane device 80S and a pressure of the primary treated liquid W1 flowing from the primary liquid passing part 91 s. To be more specific, the differential pressure gauge 89 detects the pressure difference ΔP between a pressure of the liquid-to-be-treated discharge line 52 at a position closer to the sub-reverse osmosis membrane device 80S side than the liquid-to-be-treated inflow sluice valve 61 and a pressure of the primary treated liquid line 55 at a position closer to the sub-reverse osmosis membrane device 80S side than a position at which the cleaning liquid discharge line 58 is connected. In other words, the differential pressure gauge 89 detects the pressure difference ΔP between the pressure of the seawater SW flowing from the liquid-to-be-treated inflow port 82s into the primary liquid passing part 91s and the pressure of the primary treated liquid W1 flowing out from the primary liquid passing part 91s via the primary treated liquid outflow port 83s.

The secondary treatment system 70 is provided with a plurality of main reverse osmosis membrane devices 80M, each of which has the same constitution as the previously described reverse osmosis membrane device 80 in addition to a high pressure water feed pump (a high pressure water feeder) 71 that feeds the primary treated liquid W1 flowing from the primary liquid passing part 91s of the sub-reverse osmosis membrane device 80S to the main reverse osmosis membrane devices 80M under pressure and a permeated liquid pump 72 that feeds the permeated liquid PW passing through secondary reverse osmosis membranes 86m, which are the reverse osmosis membranes 86 of the main reverse osmosis membrane devices 80M, to many places under pressure as freshwater.

Hereinafter, the casings 81 of the main reverse osmosis membrane devices 80M are used as secondary casings 81, the reverse osmosis membranes 86 thereof are used as secondary reverse osmosis membranes 86m, the liquid passing parts 91 of the main reverse osmosis membrane devices 80M are used as secondary liquid passing parts 91m, the permeating parts 92 of the main reverse osmosis membrane devices 80M are used as secondary permeating parts 92m, the liquid-to-be-treated inflow ports 82 of the main reverse osmosis membrane devices 80M are used as liquid-to-be-treated inflow ports 82m, the treated liquid outflow ports 83 of the main reverse osmosis membrane devices 80M are used as secondary treated liquid outflow ports 83m, and the permeated liquid outflow ports 84 of the main reverse osmosis membrane devices 80M are used as permeated liquid outflow ports 84m.

The high pressure water feed pump 71 is installed on the aforementioned primary treated liquid line 55. The high pressure water feed pump 71 feeds the primary treated liquid W1 into the secondary liquid passing parts 91m of the main reverse osmosis membrane devices 80M at a pressure higher than an osmotic pressure of the primary treated liquid W1 at the secondary reverse osmosis membranes 86m of the main reverse osmosis membrane devices 80M. The osmotic pressure of the primary treated liquid W1, like the osmotic pressure of the seawater SW, which is the liquid to be treated, is nearly 30 bars. For this reason, the high pressure water feed pump 71 is operated with a discharge pressure of, for example, about 65 bars, which is higher than 30 bars.

The primary treated liquid line 55 has a primary treated liquid suction line 56 that connects the primary treated liquid outflow port 83s of the sub-reverse osmosis membrane device 80S and a suction port of the high pressure water feed pump 71, and a primary treated liquid discharge line 73 that connects a discharge port of the high pressure water feed pump 71 and the liquid-to-be-treated inflow port 82m of a first stage main reverse osmosis membrane device 80Ma among the plurality of main reverse osmosis membrane devices 80M. The primary treated liquid sluice valve 62 of the primary treatment system 10 is installed on the primary treated liquid suction line 56.

The secondary liquid passing parts 91m of the plurality of main reverse osmosis membrane devices 80M are connected in series by the secondary treated liquid lines 97. To be specific, as described above, the primary treated liquid discharge line 73 is connected to the liquid-to-be-treated inflow port 82m of the first stage main reverse osmosis membrane device 80Ma among the plurality of main reverse osmosis membrane devices 80M. The secondary treated liquid outflow port 83m of the first stage main reverse osmosis membrane device 80Ma and the liquid-to-be-treated inflow port 82m of a second stage main reverse osmosis membrane device 80Mb are connected by the secondary treated liquid line 97. In addition, the secondary treated liquid outflow port 83m of the second stage main reverse osmosis membrane device 80Mb and the liquid-to-be-treated inflow port 82m of a third stage main reverse osmosis membrane device are connected by the secondary treated liquid line 97. A concentrated liquid line 98 is connected to the secondary treated liquid outflow port 83m of final stage main reverse osmosis membrane devices 80Mc.

The permeated liquid PW passing through the secondary reverse osmosis membranes 86m of the plurality of main reverse osmosis membrane devices 80M is fed to the aforementioned permeated liquid pump 72 via a permeated liquid line 74. The permeated liquid line 74 has a permeated liquid discharge line 76 that is connected to a discharge port of the permeated liquid pump 72, a permeated liquid suction main line 75m that is connected to a suction port of the permeated liquid pump 72, and permeated liquid suction branch lines 75b that respectively branch off from the permeated liquid suction main line 75m to the plurality of main reverse osmosis membrane devices 80M. The permeated liquid suction branch lines 75b are respectively connected to the permeated liquid outflow ports 84m of the main reverse osmosis membrane devices 80M.

The permeated liquid discharge line 76 and the backwashing liquid tank 41 of the primary treatment system 10 are connected by a permeated liquid feed line 77 that feeds the permeated liquid PW to the backwashing liquid tank 41 as the backwashing liquid. A permeated liquid flow control valve 78 is installed on the permeated liquid feed line 77.

An operation of the water treatment device described above will be described.

First, a normal operation state in which the seawater SW or the liquid to be treated is desalted will be described.

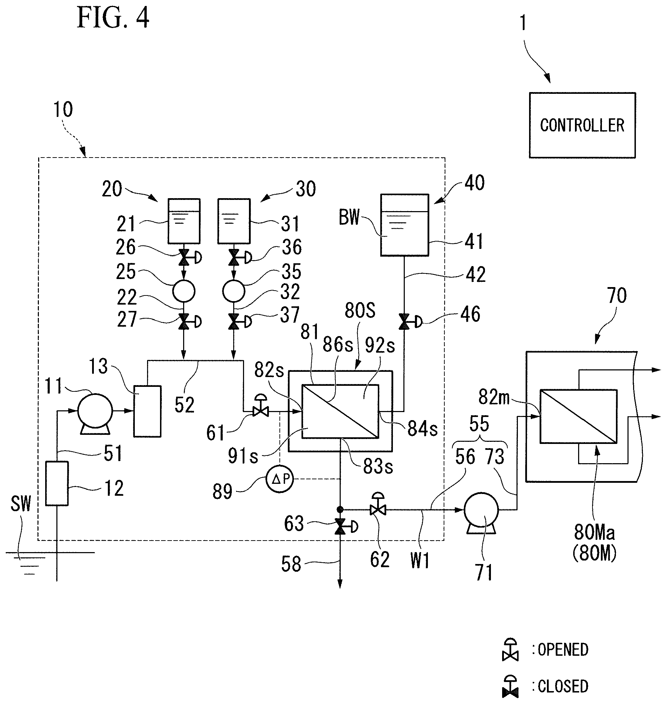

In the normal operation state, as shown in Fig. 4, the liquid-to-be-treated inflow sluice valve 61 and the primary treated liquid sluice valve 62 are opened. Meanwhile, in the normal operation state, the disinfectant sluice valve 26, the disinfectant flow control valve 27, the acidic agent sluice valve 36, the acidic agent flow control valve 37, the backwashing liquid sluice valve 46, and the cleaning liquid sluice valve 63 are closed.

The seawater SW pumped by the low pressure water feed pump 11 flows from the liquid-to-be-treated inflow port 82s of the sub-reverse osmosis membrane device 80S into the primary liquid passing part 91s of the sub-reverse osmosis membrane device 80S via the strainer 12 and the cartridge filter 13. However, the seawater SW is fed into the primary liquid passing part 91 s by the low pressure water feed pump 11 at or below an osmotic pressure of the seawater SW (a low-pressure water feeding process). For this reason, the seawater SW passes through the primary liquid passing part 91 s to flow from the primary treated liquid outflow port 83s of the sub-reverse osmosis membrane device 80S to the primary treated liquid suction line 56 as the primary treated liquid W1 without driving reverse osmosis across the primary reverse osmosis membrane 86s.

Foreign materials, which are foreign materials of the seawater SW such as fungi or inorganic matter, that pass through the strainer 12 or the cartridge filter 13 are adhered to the mesh spacer 88 (see Figs. 2 and 3) for securing a flow path in the primary liquid passing part 91s or the primary liquid passing part 91s side of the primary reverse osmosis membrane 86s in a process of passing through the primary liquid passing part 91s. For this reason, in the primary treated liquid W1 flowing along the primary treated liquid line 55, an amount of foreign materials that can be adhered to the mesh spacers 88 for securing flow paths in the secondary liquid passing parts 91m of the main reverse osmosis membrane devices 80M or the secondary liquid passing parts 91 m sides of the secondary reverse osmosis membranes 86m is significantly reduced.

As shown in Fig. 1, the primary treated liquid W1 flowing out to the primary treated liquid suction line 56 is fed into the secondary liquid passing part 91m of the first stage main reverse osmosis membrane device 80Ma by the high pressure water feed pump 71 at a pressure exceeding an osmotic pressure of the primary treated liquid W1 (a high-pressure water feeding process). For this reason, a part of the primary treated liquid W1 fed into the secondary liquid passing part 91m of the first stage main reverse osmosis membrane device 80Ma drives reverse osmosis across the secondary reverse osmosis membrane 86m of the first stage main reverse osmosis membrane device 80Ma and reaches the secondary permeating part 92m of the first stage main reverse osmosis membrane device 80Ma. Of the primary treated liquid W1 fed into the secondary liquid passing part 91m of the first stage main reverse osmosis membrane device 80Ma, the primary treated liquid W1 that does not reach the secondary permeating part 92m flows from the secondary treated liquid outflow port 83m of the first stage main reverse osmosis membrane device 80Ma into the secondary liquid passing part 91m of the second stage main reverse osmosis membrane device 80Mb via the secondary treated liquid line 97. The pressure loss of the primary treated liquid W1 in a process of passing through the secondary liquid passing part 91m of each of the main reverse osmosis membrane devices 80M is less than 1 bar. For this reason, a part of the primary treated liquid W1 fed into the secondary liquid passing part 91m of the second stage main reverse osmosis membrane device 80Mb drives reverse osmosis across the secondary reverse osmosis membrane 86m of the second stage main reverse osmosis membrane device 80Mb and reaches the secondary permeating part 92m of the second stage main reverse osmosis membrane device 80Mb. Of the primary treated liquid W1 fed into the secondary liquid passing part 91m of the second stage main reverse osmosis membrane device 80Mb, the primary treated liquid W1 that does not reach the secondary permeating part 92m flows from the secondary treated liquid outflow port 83m of the second stage main reverse osmosis membrane device 80Mb into the secondary liquid passing part 91m of the third stage main reverse osmosis membrane device 80M via the secondary treated liquid line 97. Hereinafter, the primary treated liquid W1 is also treated by the main reverse osmosis membrane devices 80M subsequent to the third stage main reverse osmosis membrane device 80M in the same way.

A secondary treated liquid S2, which is a treated liquid flowing out from the secondary liquid passing part 91m of the final stage main reverse osmosis membrane devices 80Mc, flows into the concentrated liquid line 98 and is discharged, for example, to a sea or a treatment plant via the concentrated liquid line 98.

Meanwhile, the permeated liquid PW reaching the secondary permeating parts 92m of the plurality of main reverse osmosis membrane devices 80M flows into the permeated liquid pump 72 via the permeated liquid suction branch line 75b installed on each of the plurality of main reverse osmosis membrane devices 80M and the permeated liquid suction main line 75m as freshwater. The permeated liquid PW flowing into the permeated liquid pump 72 is increased in pressure by the permeated liquid pump 72 and is fed to many places via the permeated liquid discharge line 76.

A part of the permeated liquid PW whose pressure is increased by the permeated liquid pump 72 is fed to the backwashing liquid tank 41 via the permeated liquid feed line 77 connected to the permeated liquid discharge line 76. The backwashing liquid tank 41 is provided with, for example, a liquid level gauge. The permeated liquid flow control valve 78 installed on the permeated liquid feed line 77 is opened when a backwashing liquid level detected in the backwashing liquid tank 41 by the liquid level gauge is equal to or lower than a preset level, and a part of the permeated liquid PW whose pressure is increased by the permeated liquid pump 72 is fed to the backwashing liquid tank 41.

When the amount of adhesion of the foreign materials of the seawater SW such as fungi or inorganic matter increases at the mesh spacer 88 disposed in the primary liquid passing part 91s of the sub-reverse osmosis membrane device 80S or at the primary liquid passing part 91s side of the primary reverse osmosis membrane 86s, resistance of the seawater SW flowing into the primary liquid passing part 91 s is increased so that the pressure difference ΔP between a pressure of the seawater SW flowing into the primary liquid passing part 91s of the sub-reverse osmosis membrane device 80S and a pressure of the primary treated liquid W1 flowing out from the primary liquid passing part 91s is increased and a flow rate of the liquid passing through the primary liquid passing part 91 s is reduced. For this reason, the water treatment capability of the entire water treatment device is reduced.

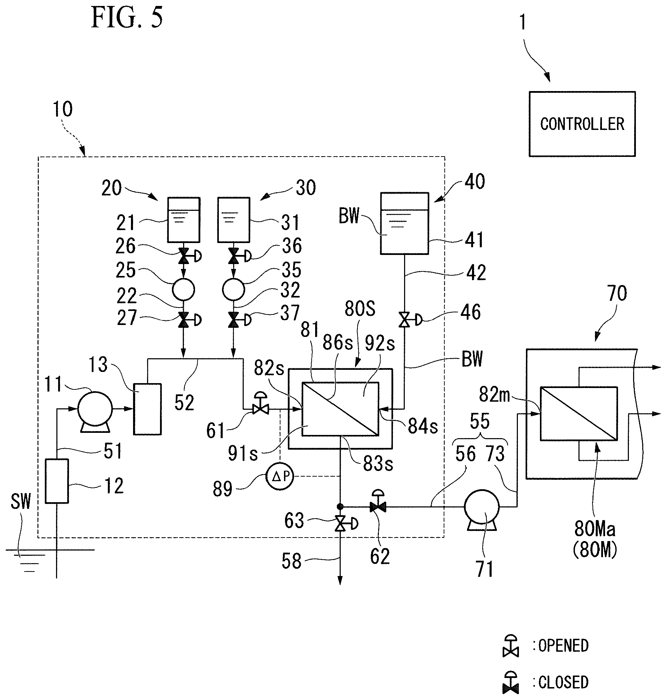

Accordingly, in the present embodiment, when the pressure difference ΔP detected by the differential pressure gauge 89 of the primary treatment system 10 is equal to or greater than a preset value, the controller 1 outputs, as shown in Fig. 5, a closing instruction to the primary treated liquid sluice valve 62 and an opening instruction to the backwashing liquid sluice valve 46 and the cleaning liquid sluice valve 63 (a switching process).

To be specific, the controller 1 outputs a stop instruction to the high pressure water feed pump 71 first. Next, the controller 1 outputs the opening instruction to the cleaning liquid sluice valve 63 and the closing instruction to the primary treated liquid sluice valve 62. Afterwards, the controller 1 outputs the opening instruction to the backwashing liquid sluice valve 46.

As a result, the seawater SW flows from the liquid-to-be-treated inflow port 82s of the sub-reverse osmosis membrane device 80S into the primary liquid passing part 91s of the sub-reverse osmosis membrane device 80S (a low-pressure water feeding process). The seawater SW flowing into the primary liquid passing part 91s flows out from the primary treated liquid outflow port 83s of the sub-reverse osmosis membrane device 80S to the primary treated liquid suction line 56 as the primary treated liquid W1. The primary treated liquid W1 flowing out to the primary treated liquid suction line 56 is discharged to the outside via the cleaning liquid discharge line 58 and the cleaning liquid sluice valve 63. The backwashing liquid BW in the backwashing liquid tank flows from the permeated liquid outflow port 84s of the sub-reverse osmosis membrane device 80S into the primary permeating part 92s via the backwashing liquid line 42 and the backwashing liquid sluice valve 46.

A concentration of a solute (salt) contained in the backwashing liquid BW (freshwater) in the primary permeating part 92s of the sub-reverse osmosis membrane device 80S is lower than a concentration of the solute (salt) contained in the seawater SW in the primary liquid passing part 91 s. For this reason, the backwashing liquid BW in the primary permeating part 92s drives forward osmosis across the primary reverse osmosis membrane 86s depending on a positive osmotic pressure and flows into the primary liquid passing part 91 s. Furthermore, since the backwashing liquid tank 41 is disposed at a place higher than the sub-reverse osmosis membrane device 80S, a liquid pressure of a liquid level difference between a liquid level of the backwashing liquid BW in the backwashing liquid tank 41 and a liquid level of the backwashing liquid BW in the primary permeating part 92s is applied to the backwashing liquid BW in the primary permeating part 92s. Therefore, the backwashing liquid BW in the primary permeating part 92s passes through the primary reverse osmosis membrane 86s and more easily flows into the primary liquid passing part 91s. In this process, the foreign materials adhered to the mesh spacer 88 for securing a flow path in the primary liquid passing part 91s or the primary liquid passing part 91s side of the primary reverse osmosis membrane 86s are stripped from the mesh spacer 88 or the primary reverse osmosis membrane 86s. These foreign materials are discharged along with the backwashing liquid BW and the seawater SW in the primary liquid passing part 91s from the primary treated liquid outflow port 83s of the sub-reverse osmosis membrane device 80S to the outside via the primary treated liquid suction line 56, the cleaning liquid discharge line 58, and the cleaning liquid sluice valve 63. That is, an operation state of the sub-reverse osmosis membrane device 80S is a backwashing state, and the sub-reverse osmosis membrane device 80S is backwashed by the backwashing liquid BW (a backwashing process).

In the present embodiment, a switching unit for switching the operation state between the normal operation state and the backwashing state is made up of the primary treated liquid sluice valve 62, the backwashing liquid sluice valve 46, and the cleaning liquid sluice valve 63.

Depending on the backwashing described above, the pressure difference ΔP between a pressure of the seawater SW flowing into the primary liquid passing part 91 s of the sub-reverse osmosis membrane device 80S and a pressure of the primary treated liquid W1 flowing out from the primary liquid passing part 91s is reduced and a flow rate of the liquid passing through the primary liquid passing part 91s is restored. Then, the controller 1 outputs the opening instruction to the primary treated liquid sluice valve 62 and the closing instruction to the backwashing liquid sluice valve 46 and the cleaning liquid sluice valve 63 (the switching process). As a result, as shown in Fig. 4, the operation state of the water treatment device returns to the normal operation state, and the water treatment caused by the water treatment device is resumed.

If the pressure difference ΔP between the pressure of the seawater SW flowing into the primary liquid passing part 91s of the sub-reverse osmosis membrane device 80S and the pressure of the primary treated liquid W1 flowing from the primary liquid passing part 91s is reduced despite backwashing the sub-reverse osmosis membrane device 80S, the controller 1 outputs the opening instruction to the disinfectant sluice valve 26 and the disinfectant flow control valve 27 and a driving instruction to the disinfectant pump 25. As a result, the disinfectant in the disinfectant tank 21 flows along with the seawater SW into the primary liquid passing part 91s of the sub-reverse osmosis membrane device 80S via the disinfectant line 22 and the liquid-to-be-treated discharge line 52.

If organisms such as fungi are propagated in the primary liquid passing part 91 s and are adhered to the mesh spacer 88 for securing a flow path in the primary liquid passing part 91s or the primary liquid passing part 91s side of the primary reverse osmosis membrane 86s, the organisms such as fungi are killed and stripped from the mesh spacer 88 or the primary reverse osmosis membrane 86s. The killed organisms are discharged, along with the seawater SW and the disinfectant flowing into the primary liquid passing part 91s, from the primary treated liquid outflow port 83s of the sub-reverse osmosis membrane device 80S to the outside via the primary treated liquid suction line 56, the cleaning liquid discharge line 58, and the cleaning liquid sluice valve 63.

If the pressure difference ΔP between the pressure of the seawater SW flowing into the primary liquid passing part 91s of the sub-reverse osmosis membrane device 80S and the pressure of the primary treated liquid W1 flowing from the primary liquid passing part 91s is reduced despite disinfecting the inside of the sub-reverse osmosis membrane device 80S, the controller 1 outputs the closing instruction to the disinfectant sluice valve 26 and the disinfectant flow control valve 27 and the stop instruction to the disinfectant pump 25, and stops the disinfecting treatment in the sub-reverse osmosis membrane device 80S. Then, the controller 1 outputs the opening instruction to the acidic agent sluice valve 36 and the acidic agent flow control valve 37 and the driving instruction to the acidic agent pump. As a result, the acidic agent in the acidic agent tank 31 flows along with the seawater SW into the primary liquid passing part 91 s of the sub-reverse osmosis membrane device 80S via the acidic agent line 32 and the liquid-to-be-treated discharge line 52.

If inorganic matters are deposited in the primary liquid passing part 91s as scale, the scale is dissolved. The dissolved scale is discharged, along with the seawater SW and the acidic agent flowing into the primary liquid passing part 91s, from the primary treated liquid outflow port 83s of the sub-reverse osmosis membrane device 80S to the outside via the primary treated liquid suction line 56, the cleaning liquid discharge line 58, and the cleaning liquid sluice valve 63acidic agent.

If the pressure difference ΔP between the pressure of the seawater SW flowing into the primary liquid passing part 91s of the sub-reverse osmosis membrane device 80S and the pressure of the primary treated liquid W1 flowing from the primary liquid passing part 91s is reduced despite performing the above backwashing, disinfecting, and dissolving of the inorganic scale component, the sub-reverse osmosis membrane device 80S is, for example, replaced with another sub-reverse osmosis membrane device 80S.

In the above description, the dissolving of the inorganic scale component is performed after the disinfecting. However, the disinfecting may be performed after the dissolving of the inorganic scale component.

As described above, in the present embodiment, since the sub-reverse osmosis membrane device 80S is displaced to be upstream of the main reverse osmosis membrane devices 80M and since foreign materials that can be deposited in the secondary liquid passing parts 91m of the main reverse osmosis membrane devices 80M are trapped by the sub-reverse osmosis membrane device 80S, a decrease in water treatment capability in the main reverse osmosis membrane devices 80M can be limited. In the present embodiment, especially since the sub-reverse osmosis membrane device 80S and the main reverse osmosis membrane devices 80M are of the same type as the reverse osmosis membrane device 80 and since deposition characteristics of foreign materials of both of the devices are the same, a trapping characteristic in which foreign materials that can be deposited in the secondary liquid passing parts 91m of the main reverse osmosis membrane devices 80M are trapped by the sub-reverse osmosis membrane device 80S can be enhanced. In the sub-reverse osmosis membrane device 80S, the seawater SW only passes through the primary liquid passing part 91s without driving reverse osmosis across the primary reverse osmosis membrane 86s. For this reason, in comparison with when the seawater SW drives reverse osmosis across the primary reverse osmosis membrane 86s in the sub-reverse osmosis membrane device 80S, a decrease in the capability of causing the inflow liquid to flow, namely treatment capability, can be limited in the sub-reverse osmosis membrane device 80S. To enhance the trapping characteristic in which foreign materials that can be deposited in the secondary liquid passing parts 91m of the main reverse osmosis membrane devices 80M are trapped by the sub-reverse osmosis membrane device 80S, it is preferable that the primary reverse osmosis membrane 86s and the secondary reverse osmosis membrane 86m are formed of the same material and that a member for securing a flow path of the primary liquid passing part 91s and a member for securing a flow path of the secondary liquid passing part 91m are formed to be the same type and of the same material.

Therefore, in the present embodiment, a decrease in water treatment capability in the water treatment device can be limited. As a result, water treatment can be performed over a long period of time.

Since the water treatment device of the present embodiment is provided with the backwashing unit 40 that backwashes the sub-reverse osmosis membrane device 80S, the disinfectant feeder 20 that disinfects the sub-reverse osmosis membrane device 80S, and the acidic agent feeder 30 that dissolves the inorganic scale component of the sub-reverse osmosis membrane device 80S, even when the treatment capability of the sub-reverse osmosis membrane device 80S is reduced, the treatment capability can be easily restored.

In the backwashing unit 40 of the present embodiment, since a liquid pressure is applied to the backwashing liquid BW in the primary permeating part 92s of the sub-reverse osmosis membrane device 80S using a liquid level difference, air stagnation or the like in the primary permeating part 92s can be prevented even when the backwashing liquid BW is not increased in pressure by the pump or the like. Therefore, the power consumption of the backwashing unit 40 can be limited.

### (Second embodiment)

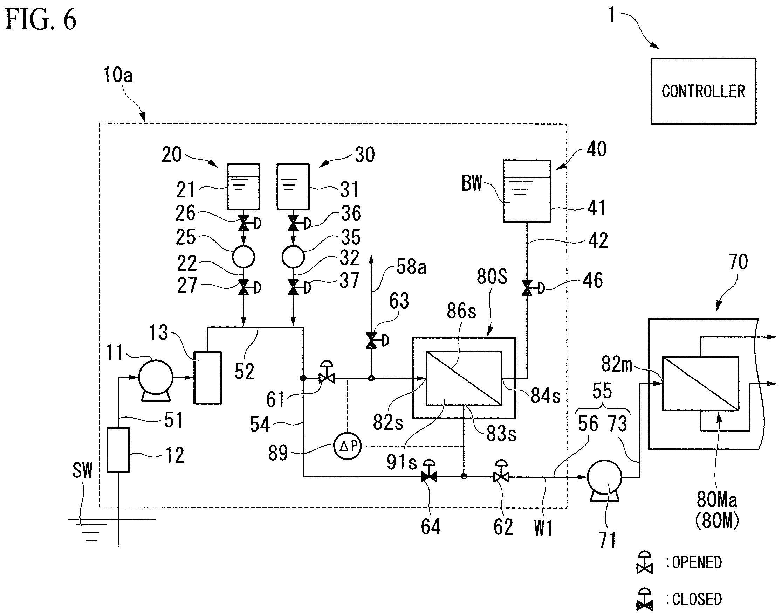

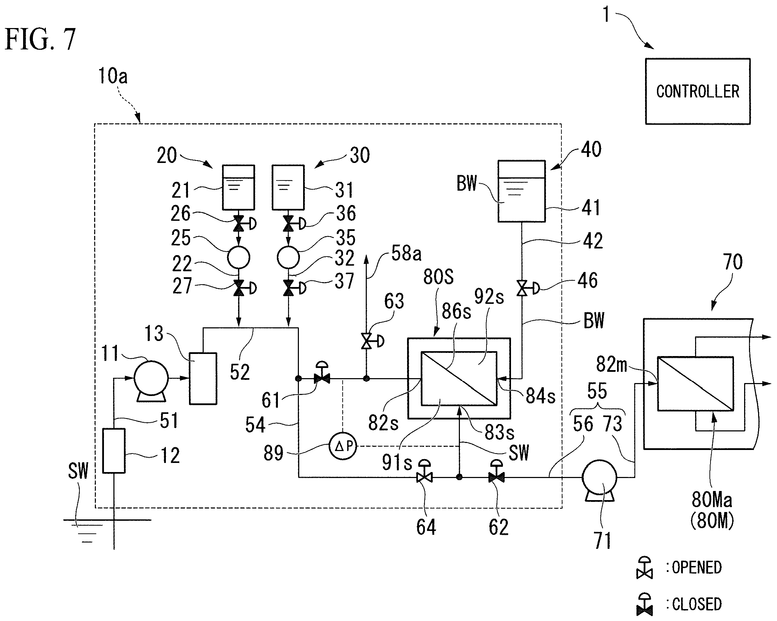

A second embodiment of the water treatment device according to the present invention will be described using Figs. 6 and 7.

Like the water treatment device of the first embodiment, a water treatment device of the present embodiment is provided with a primary treatment system 10a, a secondary treatment system 70, and a controller 1. The secondary treatment system 70 of the present embodiment is identical to the secondary treatment system 70 of the first embodiment. Meanwhile, in a comparison of the primary treatment system 10 of the first embodiment with the primary treatment system 10a of the present embodiment, as shown in Fig. 6, although various devices including a sub-reverse osmosis membrane device 80S are the same, piping lines around the sub-reverse osmosis membrane device 80S are different.

As in the first embodiment, a liquid-to-be-treated discharge line 52 is connected to a liquid-to-be-treated inflow port 82s of the sub-reverse osmosis membrane device 80S of the present embodiment. As in the first embodiment, a primary treated liquid suction line 56 is connected to a primary treated liquid outflow port 83s of the sub-reverse osmosis membrane device 80S of the present embodiment. As in the first embodiment, a backwashing liquid line 42 is connected to a permeated liquid outflow port 84s of the sub-reverse osmosis membrane device 80S of the present embodiment.

Further, the primary treatment system 10a of the present embodiment is provided with a backward passing liquid line 54 that guides seawater SW, which passes through the liquid-to-be-treated discharge line 52, from the primary treated liquid outflow port 83s to a primary liquid passing part 91s via the primary treated liquid suction line 56, wherein the liquid-to-be-treated discharge line 52 and the primary treated liquid suction line 56 are connected to each other. A backward passing liquid sluice valve 64 is installed on the backward passing liquid line 54.

In the present embodiment, a cleaning liquid discharge line 58a is connected to the liquid-to-be-treated discharge line 52 at a position closer to the sub-reverse osmosis membrane device 80S side than a position at which the liquid-to-be-treated discharge line 52 is connected to the backward passing liquid line 54. As in the first embodiment, a cleaning liquid sluice valve 63 is installed on the cleaning liquid discharge line 58a.

A liquid-to-be-treated inflow sluice valve 61 is installed on the liquid-to-be-treated discharge line 52 between the position at which the liquid-to-be-treated discharge line 52 is connected to the backward passing liquid line 54 and a position at which the liquid-to-be-treated discharge line 52 is connected to the cleaning liquid discharge line 58a. The primary treated liquid sluice valve 62 is installed on the primary treated liquid suction line 56 between a position at which the primary treated liquid suction line 56 is connected to the backward passing liquid line 54 and a high pressure water feed pump 71.

In a normal operation state of the present embodiment, as shown in Fig. 6, as in the first embodiment, the liquid-to-be-treated inflow sluice valve 61 and the primary treated liquid sluice valve 62 are opened. In the normal operation state, as in the first embodiment, a disinfectant sluice valve 26, a disinfectant flow control valve 27, an acidic agent sluice valve 36, an acidic agent flow control valve 37, a backwashing liquid sluice valve 46, and the cleaning liquid sluice valve 63 are closed. Further, in the normal operation state of the present embodiment, the backward passing liquid sluice valve 64 is closed.

For this reason, in the normal operation state of the present embodiment, as in the first embodiment, the seawater SW pumped by a low pressure water feed pump 11 flows from the liquid-to-be-treated inflow port 82s of the sub-reverse osmosis membrane device 80S into the primary liquid passing part 91s of the sub-reverse osmosis membrane device 80S via a strainer 12 and a cartridge filter 13 (a low-pressure water feeding process). The seawater SW passes through the primary liquid passing part 91s without driving reverse osmosis across the primary reverse osmosis membrane 86s and flows out from the primary treated liquid outflow port 83s of the sub-reverse osmosis membrane device 80S to the primary treated liquid suction line 56 as a primary treated liquid W1.

Therefore, even in the present embodiment, as in the first embodiment, foreign materials that can be deposited in secondary liquid passing parts 91m of main reverse osmosis membrane devices 80M can be trapped by the sub-reverse osmosis membrane device 80S.

As in the first embodiment, the primary treated liquid W1 flowing out to the primary treated liquid suction line 56 is fed into the secondary liquid passing parts 91m of the plurality of main reverse osmosis membrane devices 80M of the secondary treatment system 70 by the high pressure water feed pump 71 at a pressure exceeding an osmotic pressure of the primary treated liquid W1 (a high-pressure water feeding process).

In the present embodiment, when a pressure difference ΔP detected by a differential pressure gauge 89 of the primary treatment system 10a is equal to or higher than a preset value, the controller 1 outputs, as shown in Fig. 7, an opening instruction to the backwashing liquid sluice valve 46, the cleaning liquid sluice valve 63, and the backward passing liquid sluice valve 64 and a closing instruction to the liquid-to-be-treated inflow sluice valve 61 and the primary treated liquid sluice valve 62 (a switching process).

To be specific, the controller 1 outputs a stop instruction to the high pressure water feed pump 71 first. Then, the controller 1 outputs the opening instruction to the cleaning liquid sluice valve 63 and the closing instruction to the primary treated liquid sluice valve 62. Next, the controller 1 outputs the opening instruction to the backwashing liquid sluice valve 46. The controller 1 outputs the opening instruction to the backward passing liquid sluice valve 64 and the closing instruction to the liquid-to-be-treated inflow sluice valve 61.

As a result, the seawater SW flows from the primary treated liquid outflow port 83s of the sub-reverse osmosis membrane device 80S into the primary liquid passing part 91s of the sub-reverse osmosis membrane device 80S via the liquid-to-be-treated discharge line 52, the backward passing liquid line 54, and the primary treated liquid suction line 56 (the low-pressure water feeding process). The seawater SW flowing into the primary liquid passing part 91s is discharged from the liquid-to-be-treated inflow port 82s of the sub-reverse osmosis membrane device 80S to the outside via the liquid-to-be-treated discharge line 52, the cleaning liquid discharge line 58a, and the cleaning liquid sluice valve 63. As in the first embodiment, a backwashing liquid BW in a backwashing liquid tank flows from the permeated liquid outflow port 84s of the sub-reverse osmosis membrane device 80S into the primary permeating part 92s via the backwashing liquid line 42 and the backwashing liquid sluice valve 46. As in the first embodiment, the backwashing liquid BW in the primary permeating part 92s drives forward osmosis across the primary reverse osmosis membrane 86s and flows into the primary liquid passing part 91 s. In this process, foreign materials adhered to the mesh spacer 88 for securing a flow path in the primary liquid passing part 91s or the primary liquid passing part 91s side of the primary reverse osmosis membrane 86s are stripped from the mesh spacer 88 or the primary reverse osmosis membrane 86s. These foreign materials are discharged, along with the backwashing liquid BW and the seawater SW in the primary liquid passing part 91s, from the liquid-to-be-treated inflow port 82s of the sub-reverse osmosis membrane device 80S to the outside via the primary treated liquid suction line 56, the cleaning liquid discharge line 58a, and the cleaning liquid sluice valve 63. That is, an operation state of the sub-reverse osmosis membrane device 80S is a backwashing state, and this sub-reverse osmosis membrane device 80S is backwashed by the backwashing liquid BW (a backwashing process).

In the present embodiment, a switching unit for switching the operation state between the normal operation state and the backwashing state is made up of the liquid-to-be-treated inflow sluice valve 61, the primary treated liquid sluice valve 62, the backward passing liquid sluice valve 64, the backwashing liquid sluice valve 46, and the cleaning liquid sluice valve 63.

In the present embodiment, a flow of liquid in the primary liquid passing part 91s in the backwashing state is a direction opposite to that of the first embodiment due to a flow from the primary treated liquid outflow port 83s side to the liquid-to-be-treated inflow port 82s side. In the sub-reverse osmosis membrane device 80S, many foreign materials are trapped at an upstream portion in the primary liquid passing part 91s, in other words, at a portion of the liquid-to-be-treated inflow port 82s side in the primary liquid passing part 91s. The many foreign materials are deposited at this portion. For this reason, in the present embodiment, the foreign materials deposited in the primary liquid passing part 91s can be more efficiently removed than in the first embodiment.

When the backwashing described above is performed, for example, for a given time, the controller 1 outputs the opening instruction to the liquid-to-be-treated inflow sluice valve 61 and the primary treated liquid sluice valve 62 and the closing instruction to the backwashing liquid sluice valve 46, the cleaning liquid sluice valve 63, and the backward passing liquid sluice valve 64. As a result, as shown in Fig. 6, the operation state of the water treatment device returns to the normal operation state, and the water treatment caused by the water treatment device is resumed.

If the pressure difference ΔP between a pressure of the seawater SW flowing into the primary liquid passing part 91s of the sub-reverse osmosis membrane device 80S and a pressure of the primary treated liquid W1 flowing from the primary liquid passing part 91 s is reduced in the normal operation state despite backwashing the sub-reverse osmosis membrane device 80S, the controller 1 outputs the opening instruction to the disinfectant sluice valve 26 and the disinfectant flow control valve 27 and a driving instruction to a disinfectant pump 25. Further, like the switching process from the normal operation state to the backwashing state, the controller 1 outputs the opening instruction to the backwashing liquid sluice valve 46, the cleaning liquid sluice valve 63, and the backward passing liquid sluice valve 64 and the closing instruction to the liquid-to-be-treated inflow sluice valve 61 and the primary treated liquid sluice valve 62. As a result, a disinfectant in a disinfectant tank 21 flows from the primary treated liquid outflow port 83s of the sub-reverse osmosis membrane device 80S into the primary liquid passing part 91s of the sub-reverse osmosis membrane device 80S via a disinfectant line 22, the liquid-to-be-treated discharge line 52, the backward passing liquid line 54, and the primary treated liquid suction line 56.

In the present embodiment, a flow of liquid in the primary liquid passing part 91s in a disinfecting state is a direction opposite to that of the first embodiment due to the flow from the primary treated liquid outflow port 83s side to the liquid-to-be-treated inflow port 82s side. For this reason, organisms such as fungi adhered to the primary liquid passing part 91s can be more efficiently removed than in the first embodiment.

In the present embodiment, like the above disinfecting treatment, an acidic agent feeder 30 is driven to dissolve an inorganic scale component of the sub-reverse osmosis membrane device 80S.

As described above, the present embodiment has the same effects as the first embodiment. Further, in the present embodiment, foreign materials in the primary liquid passing part 91 s of the sub-reverse osmosis membrane device 80S can be more efficiently removed than in the first embodiment.

### (Third embodiment)

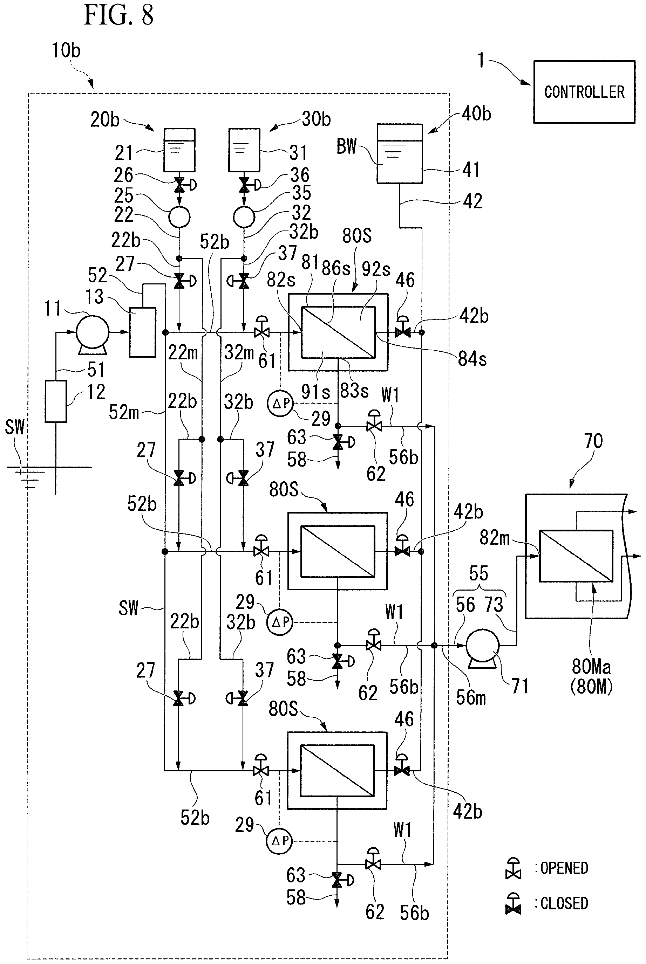

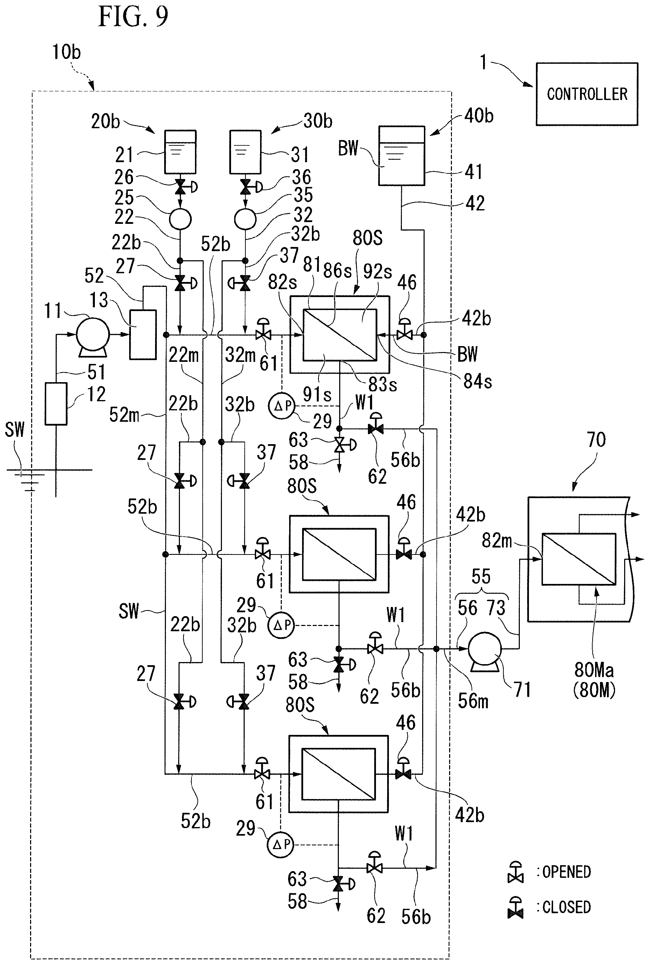

A third embodiment of the water treatment device according to the present invention will be described using Figs. 8 and 9.

Like the water treatment devices of the first and second embodiments, a water treatment device of the present embodiment is provided with a primary treatment system 10b, a secondary treatment system 70, and a controller 1. The secondary treatment system 70 of the present embodiment is identical to the secondary treatment systems 70 of the first and second embodiments. Meanwhile, as shown in Fig. 8, the primary treatment system 10b of the present embodiment is provided with a plurality of sub-reverse osmosis membrane devices 80S.

The plurality of sub-reverse osmosis membrane devices 80S of the primary treatment system 10b are connected in parallel to a liquid-to-be-treated discharge line 52. The liquid-to-be-treated discharge line 52 has a liquid-to-be-treated discharge main line 52m that is connected to a low pressure water feed pump 11, and liquid-to-be-treated branch lines 52b that respectively branch off from the liquid-to-be-treated discharge main line 52m to the plurality of sub-reverse osmosis membrane devices 80S and are connected to liquid-to-be-treated inflow ports 82s of the sub-reverse osmosis membrane devices 80S. The primary treated liquid suction line 56 has a primary treated liquid suction main line 56m that is connected to a high pressure water feed pump 71, and primary treated liquid branch lines 56b that respectively branch off from the primary treated liquid suction main line 56m to the plurality of sub-reverse osmosis membrane devices 80S and are connected to primary treated liquid outflow ports 83s of the sub-reverse osmosis membrane devices 80S.

A liquid-to-be-treated inflow sluice valve 61 is installed on each of the liquid-to-be-treated branch lines 52b. A cleaning liquid discharge line 58 is connected to each of the primary treated liquid branch lines 56b. Cleaning liquid sluice valves 63 are installed on these cleaning liquid discharge lines 58. Primary treated liquid sluice valves 62 are installed on the primary treated liquid branch lines 56b at the secondary treatment system 70 side to be closer thereto than positions at which the cleaning liquid discharge lines 58 are connected.

Differential pressure gauges 89 are respectively provided for the plurality of sub-reverse osmosis membrane devices 80S. As in the first embodiment, each of the differential pressure gauges 89 detects a pressure difference ΔP between a pressure in the liquid-to-be-treated branch line 52b at a position closer to the sub-reverse osmosis membrane device 80S side than the liquid-to-be-treated inflow sluice valve 61 and a pressure in the primary treated liquid branch line 56b at a position closer to the sub-reverse osmosis membrane device 80S side than a position at which the cleaning liquid discharge line 58 is connected.

A backwashing liquid line 42 of a backwashing unit 40b has a backwashing liquid main line 42m that is connected to a backwashing liquid tank 41, and backwashing liquid branch lines 42b that respectively branch off from the backwashing liquid main line 42m to the plurality of sub-reverse osmosis membrane devices 80S and are connected to permeated liquid outflow ports 84s of the sub-reverse osmosis membrane devices 80S. A backwashing liquid sluice valve 46 is installed on each of the backwashing liquid branch lines 42b.

As in each of the above embodiments, a disinfectant feeder 20b of the present embodiment also has a disinfectant tank 21, a disinfectant line 22, a disinfectant pump 25, a disinfectant sluice valve 26, and disinfectant flow control valves 27. However, the disinfectant line 22 of the present embodiment has a disinfectant main line 22m that is connected to the disinfectant tank 21 and disinfectant branch lines 22b that respectively branch off from the disinfectant main line 22m to the plurality of liquid-to-be-treated branch lines 52b and are connected to the corresponding liquid-to-be-treated branch lines 52b. The disinfectant pump 25 and the disinfectant sluice valve 26 are installed on the disinfectant main line 22m. The disinfectant flow control valves 27 are respectively installed on the disinfectant branch lines 22b.

As in the above embodiments, an acidic agent feeder 30b of the present embodiment also has an acidic agent tank 31, an acidic agent line 32, an acidic agent pump 35, an acidic agent sluice valve 36, and acidic agent flow control valves 37. However, the acidic agent line 32 of the present embodiment has an acidic agent main line 32m that is connected to the acidic agent tank 31, and acidic agent branch lines 32b that respectively branch off from the acidic agent main line 32m to the plurality of liquid-to-be-treated branch lines 52b and are connected to the corresponding liquid-to-be-treated branch lines 52b. The acidic agent pump 35 and the acidic agent sluice valve 36 are installed on the acidic agent main line 32m. The acidic agent flow control valves 37 are respectively installed on the acidic agent branch lines 32b.

As described above, the water treatment device of the present embodiment is provided with the plurality of sub-reverse osmosis membrane devices 80S and has various lines and various valves provided around each of the sub-reverse osmosis membrane devices 80S as in the first embodiment.

In a normal operation state of the present embodiment, as shown in Fig. 8, as in the first embodiment, each of the liquid-to-be-treated inflow sluice valves 61 and each of the primary treated liquid sluice valves 62 are opened. In the normal operation state, as in the first embodiment, the disinfectant sluice valve 26, each of the disinfectant flow control valves 27, the acidic agent sluice valve 36, each of the acidic agent flow control valves 37, each of the backwashing liquid sluice valves 46, and each of the cleaning liquid sluice valves 63 are closed. In the present embodiment, a switching unit for switching an operation state between the normal operation state and a backwashing state is made up of each of the primary treated liquid sluice valves 62, each of the backwashing liquid sluice valves 46, and each of the cleaning liquid sluice valves 63.

In the normal operation state of the present embodiment, as in the first embodiment, seawater SW pumped by the low pressure water feed pump 11 flows from the liquid-to-be-treated inflow ports 82s of the respective sub-reverse osmosis membrane devices 80S into the primary liquid passing parts 91s of the respective sub-reverse osmosis membrane devices 80S via a strainer 12, a cartridge filter 13, the liquid-to-be-treated discharge main line 52m, and the plurality of liquid-to-be-treated branch lines 52b (a low-pressure water feeding process). Streams of the seawater SW pass through the primary liquid passing parts 91s without driving reverse osmosis across primary reverse osmosis membranes 86s and flows from the primary treated liquid outflow ports 83s of the respective sub-reverse osmosis membrane devices 80S to the primary treated liquid branch lines 56b as streams of primary treated liquid W1.

Therefore, even in the present embodiment, as in the first embodiment, foreign materials that can be deposited in secondary liquid passing parts 91m of the main reverse osmosis membrane devices 80M can be trapped by the sub-reverse osmosis membrane devices 80S.

The streams of the primary treated liquid W1 flowing out to the primary treated liquid branch lines 56b join at a primary treated liquid suction main line 56m and are fed into the secondary liquid passing parts 91m of the plurality of main reverse osmosis membrane devices 80M of the secondary treatment system 70 by the high pressure water feed pump 71 at a pressure exceeding an osmotic pressure of the joined streams of the primary treated liquid W1 (a high-pressure water feeding process).

In the present embodiment, when the pressure difference ΔP detected by any one of the plurality of differential pressure gauges 89 is equal to or higher than a preset value, the controller 1 outputs, as shown in Fig. 9, a closing instruction to the primary treated liquid sluice valve 62 corresponding to one sub-reverse osmosis membrane device 80S in which the pressure difference ΔP is detected by the differential pressure gauge 89 and outputs an opening instruction to the backwashing liquid sluice valve 46 and the cleaning liquid sluice valve 63 corresponding to the one sub-reverse osmosis membrane device 80S (a switching process). However, in the switching process of the present embodiment, unlike the switching process of the first embodiment, the controller 1 does not output a stop instruction to the high pressure water feed pump 71.

As in the normal operation state, the seawater SW flows from the liquid-to-be-treated inflow ports 82s of the sub-reverse osmosis membrane devices 80S into the primary liquid passing parts 91s of the sub-reverse osmosis membrane devices 80S via the liquid-to-be-treated discharge main line 52m and the plurality of liquid-to-be-treated branch lines 52b (a low-pressure water feeding process). The seawater SW passes through the primary liquid passing parts 91s and flows from the primary treated liquid outflow port 83s of each of the sub-reverse osmosis membrane devices 80S to each of the primary treated liquid branch lines 56b as the primary treated liquid W1.

The primary treated liquid W1 flowing out to the primary treated liquid branch line 56b of the aforementioned one sub-reverse osmosis membrane devices 80S is discharged to the outside via the cleaning liquid discharge line 58 and the cleaning liquid sluice valve 63 which are connected to the primary treated liquid branch line 56b. A backwashing liquid BW (freshwater) in a backwashing liquid tank flows from the permeated liquid outflow port 84s of the one sub-reverse osmosis membrane device 80S into the primary permeating part 92s via the backwashing liquid main line 42m, the backwashing liquid branch line 42b connected to the one sub-reverse osmosis membrane device 80S, and the backwashing liquid sluice valve 46 installed on the backwashing liquid branch line 42b. As in the first embodiment, the backwashing liquid BW in each of the primary permeating parts 92s drives forward osmosis across each of the primary reverse osmosis membranes 86s and flows into each of the primary liquid passing parts 91s. In this process, foreign materials adhered to a mesh spacer 88 for securing a flow path in each of the primary liquid passing parts 91 s or the primary liquid passing part 91 s side of each of the primary reverse osmosis membranes 86s are stripped from the mesh spacer 88 or the primary reverse osmosis membrane 86s. The foreign materials are discharged, along with the backwashing liquid BW and the seawater SW in the primary liquid passing part 91s, from the liquid-to-be-treated inflow port 82s of the one sub-reverse osmosis membrane device 80S to the outside via the primary treated liquid branch line 56b, the cleaning liquid discharge line 58, and the cleaning liquid sluice valve 63. That is, an operation state of the one sub-reverse osmosis membrane device 80S is a backwashing state and the one sub-reverse osmosis membrane device 80S is backwashed by the backwashing liquid BW (a backwashing process).

Meanwhile, the streams of the primary treated liquid W1 flowing out from the sub-reverse osmosis membrane devices 80S excluding the one sub-reverse osmosis membrane device 80S join at the primary treated liquid suction main line 56m via the respective primary treated liquid branch lines 56b and are fed into the secondary liquid passing parts 91m of the plurality of main reverse osmosis membrane devices 80M of the secondary treatment system 70 by the high pressure water feed pump 71 at a pressure exceeding an osmotic pressure of the joined streams of primary treated liquid W1 (a high-pressure water feeding process).

Therefore, the sub-reverse osmosis membrane devices 80S excluding the one sub-reverse osmosis membrane device 80S and the plurality of main reverse osmosis membrane devices 80M maintain the normal operation state and continue to desalt the seawater SW.

When the pressure difference ΔP beteen the pressure in the liquid-to-be-treated inflow port 82s and the pressure in the primary treated liquid outflow port 83s of the one sub-reverse osmosis membrane device 80S are reduced by the backwashing of the one sub-reverse osmosis membrane device 80S, which is described above, the controller 1 outputs the opening instruction to the primary treated liquid sluice valve 62 corresponding to the one sub-reverse osmosis membrane device 80S and outputs the closing instruction to the backwashing liquid sluice valve 46 and the cleaning liquid sluice valve 63 corresponding to the one sub-reverse osmosis membrane device 80S. As a result, as shown in Fig. 8, the operation state of the one sub-reverse osmosis membrane device 80S returns to the normal operation state.

If the pressure difference ΔP beteen the pressure in the liquid-to-be-treated inflow port 82s and the pressure in the primary treated liquid outflow port 83s of the one sub-reverse osmosis membrane device 80S are not reduced despite backwashing the one sub-reverse osmosis membrane device 80S, as in the first embodiment, the controller 1 outputs the opening instruction to the disinfectant sluice valve 26 and the disinfectant flow control valve 27 corresponding to the one sub-reverse osmosis membrane device 80S and a driving instruction to the disinfectant pump 25. As a result, a disinfectant in the disinfectant tank 21 flows along with the seawater SW into the primary liquid passing part 91s of the one sub-reverse osmosis membrane device 80S via the disinfectant branch line 22b and the liquid-to-be-treated branch line 52b.

If the pressure difference ΔP beteen the pressure in the liquid-to-be-treated inflow port 82s and the pressure in the primary treated liquid outflow port 83s of the one sub-reverse osmosis membrane device 80S are not reduced despite disinfecting the inside of the one sub-reverse osmosis membrane device 80S, the controller 1 outputs a closing instruction to the disinfectant sluice valve 26 and the disinfectant flow control valve 27 corresponding to the one sub-reverse osmosis membrane device 80S and a stop instruction to the disinfectant pump 25, and stops disinfecting the inside of the one sub-reverse osmosis membrane device 80S. Then, the controller 1 outputs an opening instruction to the acidic agent sluice valve 36 and the acidic agent flow control valve 37 corresponding to the one sub-reverse osmosis membrane device 80S and the driving instruction to the acidic agent pump 35. As a result, an acidic agent in the acidic agent tank 31 flows along with the seawater SW into the primary liquid passing part 91s of the one sub-reverse osmosis membrane device 80S via the acidic agent branch line 32b and the liquid-to-be-treated branch line 52b.

As described above, in the present embodiment, even when the operation state of the one sub-reverse osmosis membrane device 80S is set to be in the backwashing state or in a state in which a disinfecting treatment or a dissolving treatment of inorganic scale is performed on the one sub-reverse osmosis membrane device 80S, a desalting treatment of the seawater SW can be continuously performed by the other sub-reverse osmosis membrane devices 80S and the plurality of main reverse osmosis membrane devices 80M. Accordingly, in the present embodiment, the desalting treatment can be continued over a longer period of time than in the first and second embodiments.

### (Fourth embodiment)

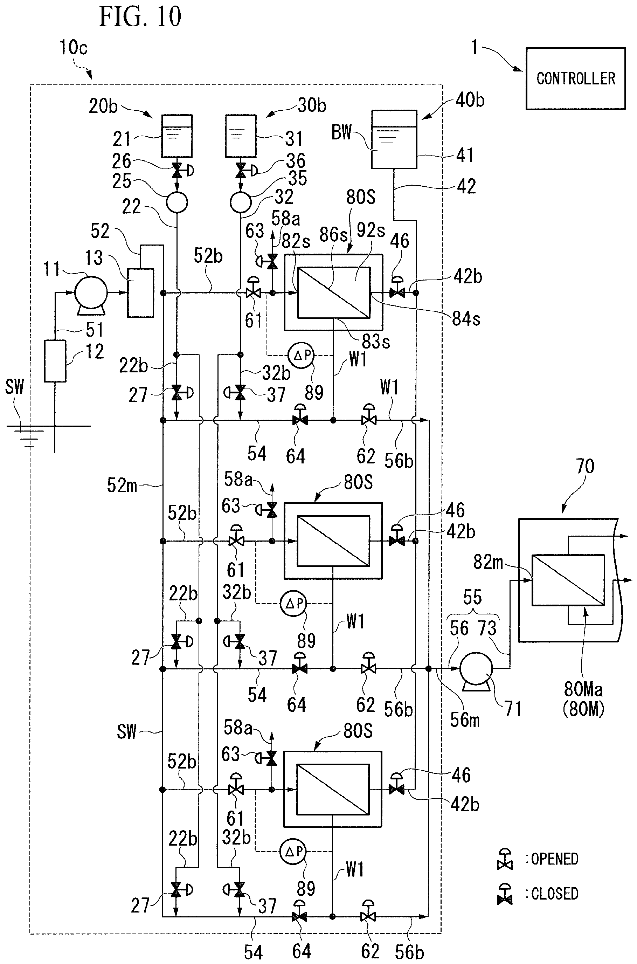

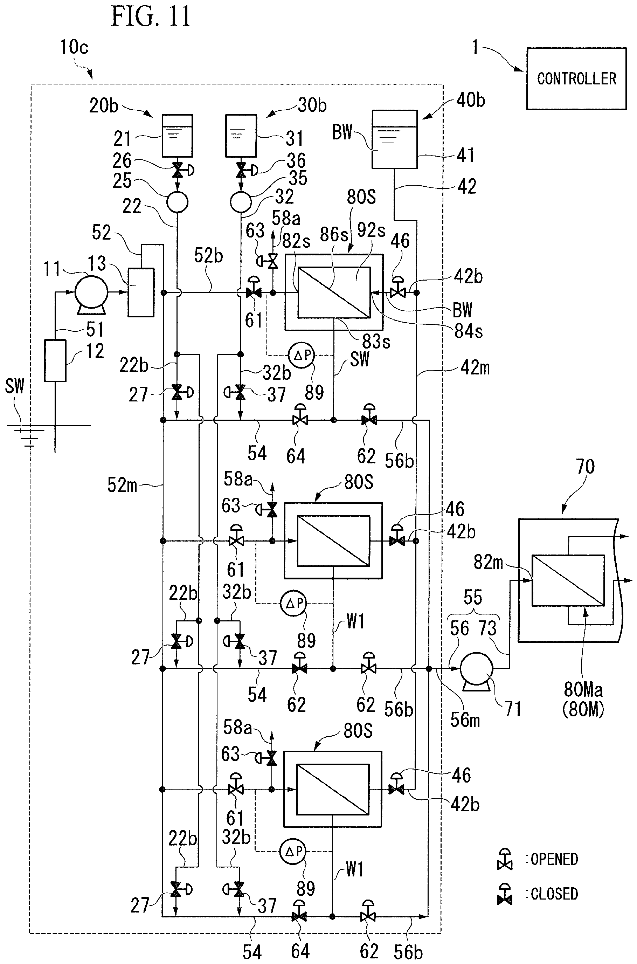

A fourth embodiment of the water treatment device according to the present invention will be described using Figs. 10 and 11.

Like the water treatment devices of the first and second embodiments, a water treatment device of the present embodiment is provided with a primary treatment system 10c, a secondary treatment system 70, and a controller 1. The secondary treatment system 70 of the present embodiment is identical to the secondary treatment systems 70 of the first and second embodiments. Meanwhile, as shown in Fig. 10, the primary treatment system 10c of the present embodiment is provided with a plurality of sub-reverse osmosis membrane devices 80S as in the third embodiment.

As in the third embodiment, the plurality of sub-reverse osmosis membrane devices 80S of the primary treatment system 10c are connected in parallel to a liquid-to-be-treated discharge line 52. For this reason, as in the third embodiment, the liquid-to-be-treated discharge line 52 has a liquid-to-be-treated discharge main line 52m and liquid-to-be-treated branch lines 52b that respectively branch off from the liquid-to-be-treated discharge main line 52m to the plurality of sub-reverse osmosis membrane devices 80S. As in the third embodiment, a primary treated liquid suction line 56 also has a primary treated liquid suction main line 56m and primary treated liquid branch lines 56b that respectively branch off from the primary treated liquid suction main line 56m to the plurality of sub-reverse osmosis membrane devices 80S. As in the second embodiment, the primary treatment system 10c of the present embodiment has backward passing liquid lines 54 respectively provided for the plurality of primary treated liquid branch lines 56b. One ends of the backward passing liquid lines 54 are connected to the liquid-to-be-treated discharge main line 52m, and the other ends thereof are connected to the primary treated liquid branch lines 56b. Backward passing liquid sluice valves 64 are respectively installed on the backward passing liquid lines 54.

Liquid-to-be-treated inflow sluice valves 61 are respectively installed on the liquid-to-be-treated branch lines 52b. As in the second embodiment, cleaning liquid discharge lines 58a are respectively connected to the liquid-to-be-treated branch lines 52b at positions closer to the sub-reverse osmosis membrane devices 80S sides thereof than positions at which the liquid-to-be-treated inflow sluice valves 61 are installed. Cleaning liquid sluice valves 63 are installed on the cleaning liquid discharge lines 58a. In addition, primary treated liquid sluice valves 62 are respectively installed on the primary treated liquid branch lines 56b at the primary treated liquid suction main line 56m side rather than at positions at which the primary treated liquid branch lines 56b are connected to the backward passing liquid lines 54.

Differential pressure gauges 89 are respectively provided for the plurality of sub-reverse osmosis membrane devices 80S. As in the second embodiment, each of the differential pressure gauges 89 detects a pressure difference ΔP between a pressure in the liquid-to-be-treated branch line 52b at a position closer to the sub-reverse osmosis membrane device 80S side than the liquid-to-be-treated inflow sluice valve 61 and a pressure in the primary treated liquid branch line 56b at a position closer to each the sub-reverse osmosis membrane device 80S side than a position at which the cleaning liquid discharge line 58 is connected.

As in the third embodiment, a backwashing liquid line 42 of a backwashing unit 40b has a backwashing liquid main line 42m that is connected to the backwashing liquid line 42, and backwashing liquid branch lines 42b that respectively branch off from the backwashing liquid main line 42m to the plurality of sub-reverse osmosis membrane devices 80S. Backwashing liquid sluice valves 46 are respectively installed on the backwashing liquid branch lines 42b.

As in the above embodiments, a disinfectant feeder 20b of the present embodiment has a disinfectant tank 21, a disinfectant line 22, a disinfectant pump 25, a disinfectant sluice valve 26, and disinfectant flow control valves 27. However, as in the third embodiment, the disinfectant line 22 of the present embodiment has a disinfectant main line 22m that is connected to the disinfectant tank 21, and a plurality of disinfectant branch lines 22b that branch from the disinfectant main line 22m. The disinfectant branch lines 22b are connected to the corresponding backward passing liquid lines 54. The disinfectant pump 25 and the disinfectant sluice valve 26 are installed on the disinfectant main line 22m. The disinfectant flow control valves 27 are respectively installed on the disinfectant branch lines 22b.

As in the above embodiments, an acidic agent feeder 30b of the present embodiment also has an acidic agent tank 31, an acidic agent line 32, an acidic agent pump 35, an acidic agent sluice valve 36, and acidic agent flow control valves 37. However, as in the third embodiment, the acidic agent line 32 of the present embodiment has an acidic agent main line 32m that is connected to the acidic agent tank 31, and a plurality of acidic agent branch lines 32b that branch from the acidic agent main line 32m. The acidic agent branch lines 32b are connected to the corresponding backward passing liquid lines 54. The acidic agent pump 35 and the acidic agent sluice valve 36 are installed on the acidic agent main line 32m. The acidic agent flow control valves 37 are respectively installed on the acidic agent branch lines 32b.

As described above, the water treatment device of the present embodiment is provided with the plurality of sub-reverse osmosis membrane devices 80S and has various lines and various valves provided around each of the sub-reverse osmosis membrane devices 80S as in the second embodiment.

In a normal operation state of the present embodiment, as shown in Fig. 10, as in the second embodiment, each of the liquid-to-be-treated inflow sluice valves 61 and each of the primary treated liquid sluice valves 62 are opened. In this normal operation state, as in the second embodiment, the disinfectant sluice valve 26, each of the disinfectant flow control valves 27, the acidic agent sluice valve 36, each of the acidic agent flow control valves 37, each of the backwashing liquid sluice valves 46, each of the cleaning liquid sluice valves 63, and each of the backward passing liquid sluice valves 64 are closed. In the present embodiment, a switching unit for switching an operation state between the normal operation state and a backwashing state is made up of each of the liquid-to-be-treated inflow sluice valves 61, each of the primary treated liquid sluice valves 62, each of the backward passing liquid sluice valves 64, each of the backwashing liquid sluice valves 46, and each of the cleaning liquid sluice valves 63.

In the normal operation state of the present embodiment, as in the second embodiment, seawater SW pumped by the low pressure water feed pump 11 flows from liquid-to-be-treated inflow ports 82s of the respective sub-reverse osmosis membrane devices 80S into primary liquid passing parts 91s of the respective sub-reverse osmosis membrane devices 80S via a strainer 12, a cartridge filter 13, the liquid-to-be-treated discharge main line 52m, and the plurality of liquid-to-be-treated branch lines 52b (a low-pressure water feeding process). The seawater SW passes through the primary liquid passing parts 91s without driving reverse osmosis across primary reverse osmosis membranes 86s and flows out from the primary treated liquid outflow port 83s of the respective sub-reverse osmosis membrane devices 80S to the primary treated liquid branch lines 56b as primary treated liquid W1.

Therefore, even in the present embodiment, as in the second embodiment, foreign materials that can be deposited in secondary liquid passing parts 91m of the main reverse osmosis membrane devices 80M can be trapped by the respective sub-reverse osmosis membrane devices 80S.

The streams of primary treated liquid W1 flowing out to the primary treated liquid branch lines 56b join at a primary treated liquid suction main line 56m and are fed into the secondary liquid passing parts 91m of the plurality of main reverse osmosis membrane devices 80M of the secondary treatment system 70 by the high pressure water feed pump 71 at a pressure exceeding an osmotic pressure of the joined streams of primary treated liquid W1 (a high-pressure water feeding process).

In the present embodiment, when the pressure difference ΔP detected by any one of the plurality of differential pressure gauges 89 is equal to or higher than a preset value, the controller 1 outputs, as shown in Fig. 11, an opening instruction to the backwashing liquid sluice valve 46, the cleaning liquid sluice valve 63, and the backward passing liquid sluice valve 64 corresponding to one sub-reverse osmosis membrane device 80S in which the pressure difference ΔP is detected by this differential pressure gauges 89 and outputs a closing instruction to the liquid-to-be-treated inflow sluice valve 61 and the primary treated liquid sluice valve 62 corresponding to the one sub-reverse osmosis membrane device 80S (a switching process). However, in the switching process of the present embodiment, unlike the switching process of the second embodiment, the controller 1 does not output a stop instruction to the high pressure water feed pump 71.

As a result, a part of the seawater SW flows from the primary treated liquid outflow port 83s of the one sub-reverse osmosis membrane device 80S into the primary liquid passing part 91s of the one sub-reverse osmosis membrane device 80S via the liquid-to-be-treated discharge line 52 and the backward passing liquid line 54 and the primary treated liquid suction line 56 which correspond to the one sub-reverse osmosis membrane device 80S. The seawater SW flowing into the primary liquid passing part 91s is discharged from the liquid-to-be-treated inflow port 82s of the one sub-reverse osmosis membrane device 80S to the outside via the primary treated liquid suction line 56, the cleaning liquid discharge line 58a, and the cleaning liquid sluice valve 63. A backwashing liquid BW (freshwater) in a backwashing liquid tank flows from the permeated liquid outflow port 84s of the one sub-reverse osmosis membrane device 80S into the primary permeating part 92s via the backwashing liquid main line 42m, the backwashing liquid branch line 42b connected to the one sub-reverse osmosis membrane device 80S, and the backwashing liquid sluice valve 46 installed on this backwashing liquid branch line 42b. As in the second embodiment, the backwashing liquid BW in each of the primary permeating parts 92s drives forward osmosis across each of the primary reverse osmosis membranes 86s and flows into each of the primary liquid passing parts 91s. In this process, foreign materials adhered to a mesh spacer 88 for securing a flow path in each of the primary liquid passing parts 91s or the primary liquid passing part 91s side of each of the primary reverse osmosis membranes 86s are stripped from the mesh spacer 88 or the primary reverse osmosis membrane 86s. The foreign materials are discharged, along with the backwashing liquid BW and the seawater SW in the primary liquid passing part 91s, from the liquid-to-be-treated inflow port 82s of the one sub-reverse osmosis membrane device 80S to the outside via the liquid-to-be-treated branch line 52b, the cleaning liquid discharge line 58a, and the cleaning liquid sluice valve 63. That is, an operation state of the one sub-reverse osmosis membrane device 80S is a backwashing state and the one sub-reverse osmosis membrane device 80S is backwashed by the backwashing liquid BW (a backwashing process).

As in the normal operation state, the rest of the seawater SW flows from the liquid-to-be-treated inflow ports 82s of the other sub-reverse osmosis membrane devices 80S into the primary liquid passing parts 91s of the other sub-reverse osmosis membrane devices 80S via the liquid-to-be-treated discharge main line 52m and the liquid-to-be-treated branch lines 52b of the other sub-reverse osmosis membrane devices 80S excluding the one sub-reverse osmosis membrane device 80S (a low-pressure water feeding process). The seawater SW passes through the primary liquid passing parts 91s and flows from the primary treated liquid outflow ports 83s of the other sub-reverse osmosis membrane devices 80S to the primary treated liquid branch lines 56b as the primary treated liquid W1.

The streams of the primary treated liquid W1 flowing from the other sub-reverse osmosis membrane devices 80S excluding the one sub-reverse osmosis membrane device 80S join at the primary treated liquid suction main line 56m via the respective primary treated liquid branch lines 56b and are fed into the secondary liquid passing parts 91m of the plurality of main reverse osmosis membrane devices 80M of the secondary treatment system 70 by the high pressure water feed pump 71 at a pressure exceeding an osmotic pressure of the joined streams of the primary treated liquid W1 (a high-pressure water feeding process).

Therefore, the sub-reverse osmosis membrane devices 80S excluding the one sub-reverse osmosis membrane device 80S and the plurality of main reverse osmosis membrane devices 80M maintain the normal operation state and continue to desalt the seawater SW.

When the backwashing of the inside of the one sub-reverse osmosis membrane device 80S which is described above is performed, for example, for a given time, the controller 1 outputs the opening instruction to the liquid-to-be-treated inflow sluice valve 61 and the primary treated liquid sluice valve 62 and the closing instruction to the backwashing liquid sluice valve 46, the cleaning liquid sluice valve 63, and the backward passing liquid sluice valve 64. As a result, as shown in Fig. 10, the operation state of the one sub-reverse osmosis membrane device 80S returns to the normal operation state.

If the pressure difference ΔP between a pressure of the seawater SW flowing into the primary liquid passing part 91s of the one sub-reverse osmosis membrane device 80S in the normal operation state and a pressure of the primary treated liquid W1 flowing from the primary liquid passing part 91s is reduced despite backwashing the one sub-reverse osmosis membrane device 80S, as in the second embodiment, the controller 1 outputs the opening instruction to the disinfectant sluice valve 26 and the disinfectant flow control valve 27 corresponding to the one sub-reverse osmosis membrane device 80S and a driving instruction to the disinfectant pump 25. Further, like the switching process from the normal operation state to the backwashing state, the controller 1 outputs the opening instruction to the backwashing liquid sluice valve 46, the cleaning liquid sluice valve 63, and the backward passing liquid sluice valve 64 and the closing instruction to the liquid-to-be-treated inflow sluice valves 61 and the primary treated liquid sluice valves 62. As a result, a disinfectant in the disinfectant tank 21 flows along with the seawater SW from the primary treated liquid outflow port 83s of the one sub-reverse osmosis membrane device 80S into the primary liquid passing part 91s via the disinfectant branch line 22b, the backward passing liquid line 54, and the primary treated liquid branch line 56b.

In the present embodiment, like the above disinfecting treatment, the acidic agent feeder 30b is driven to dissolve inorganic scale components of the sub-reverse osmosis membrane devices 80S.

As described above, in the present embodiment, when the sub-reverse osmosis membrane devices 80S are in the backwashing state or perform the disinfecting treatment or the dissolving treatment of the inorganic scale, flows of the liquids in the primary liquid passing parts 91s become flows from the primary treated liquid outflow ports 83s sides to the liquid-to-be-treated inflow ports 82s sides like the second embodiment. For this reason, in the present embodiment, like the second embodiment, the foreign materials in the primary liquid passing parts 91s can be efficiently removed.

Further, in the present embodiment, even when the operation state of one of the plurality of sub-reverse osmosis membrane devices 80S is set to be in the backwashing state or in a state in which the disinfecting treatment or the dissolving treatment of the inorganic scale is performed on the one sub-reverse osmosis membrane device 80S, the desalting treatment of the seawater SW can be continuously performed by the other sub-reverse osmosis membrane devices 80S and the plurality of main reverse osmosis membrane devices 80M. Accordingly, in the present embodiment, the desalting treatment can be continued over a longer period of time than in the first and second embodiments.

### (Modification)

In each of the above embodiments, both the sub-reverse osmosis membrane device(s) 80S and the main reverse osmosis membrane devices 80M are a spiral type reverse osmosis membrane device. However, the reverse osmosis membrane device may not be the spiral type and may be various types such as, for example, a hollow fiber type, a tubular type, and so on. In each of the above embodiments, the sub-reverse osmosis membrane device(s) 80S and the main reverse osmosis membrane devices 80M are the same type of reverse osmosis membrane device. However, the sub-reverse osmosis membrane device(s) 80S and the main reverse osmosis membrane devices 80M may be different types of reverse osmosis membrane devices. However, to enhance the trapping characteristic in which foreign materials that can be deposited in the secondary liquid passing parts 91m of the main reverse osmosis membrane devices 80M are trapped by the sub-reverse osmosis membrane device 80S, it is preferable that the sub-reverse osmosis membrane device(s) 80S and the main reverse osmosis membrane devices 80M are the same type.

The switching units of the first and third embodiments are each made up of the primary treated liquid sluice valve 62, the backwashing liquid sluice valve 46, and the cleaning liquid sluice valve 63. However, the switching units may not use the above three kinds of sluice valves. For example, in place of the primary treated liquid sluice valve 62 and the cleaning liquid sluice valve 63, a three-way valve having functions of the primary treated liquid sluice valve 62 and the cleaning liquid sluice valve 63 may be used. Moreover, the switching units of the second and fourth embodiments are each made up of the liquid-to-be-treated inflow sluice valve 61, the primary treated liquid sluice valve 62, the backward passing liquid sluice valve 64, the backwashing liquid sluice valve 46, and the cleaning liquid sluice valve 63. However, the switching units may not use the above five kinds of sluice valves. For example, in place of the liquid-to-be-treated inflow sluice valve 61 and the cleaning liquid sluice valve 63, a three-way valve having functions of the liquid-to-be-treated inflow sluice valve 61 and the cleaning liquid sluice valve 63 may be used. In place of the primary treated liquid sluice valve 62 and the backward passing liquid sluice valve 64, a three-way valve having functions of the primary treated liquid sluice valve 62 and the backward passing liquid sluice valve 64 may be used.

In each of the above embodiments, when the pressure difference ΔP between an upstream side and a downstream side from the primary liquid passing part 91s is equal to or higher than a preset value, the switching from the normal operation state to the backwashing state is performed. However, the switching from the normal operation state to the backwashing state may be adapted to be periodically performed.

In each of the above embodiments, freshwater, which is the permeated liquid PW flowing from the main reverse osmosis membrane devices 80M of the secondary treatment system 70, is used as the backwashing liquid BW. However, freshwater may not be used as the backwashing liquid BW for backwashing the sub-reverse osmosis membrane device 80S if the water has a lower concentration of a solute (salt) than the seawater SW, which is the liquid to be treated. For example, water in which the solute (salt) is more or less mixed may be used.

In the primary treatment systems of the above embodiments, the acidic agent feeder and the disinfectant feeder are provided. However, in the primary treatment systems, the acidic agent feeder and the disinfectant feeder may not be provided. The acidic agent feeder may be provided, for example, for the secondary treatment system only. In the secondary treatment systems of the above embodiments, the acidic agent feeder, the disinfectant feeder, and the backwashing unit are not provided, but these units may be provided for the secondary treatment systems. When the acidic agent feeder is provided for either of the treatment systems, a reductant feeder may be provided to neutralize a liquid acidified by an acidic agent being fed thereto. The disinfecting treatment and the dissolving treatment of the inorganic scale component may be performed on the main reverse osmosis membrane devices 80M of the secondary treatment system by the acidic agent feeder and the disinfectant feeder provided for the above primary treatment system. In this case, the acidic agent and a disinfectant are fed to the main reverse osmosis membrane devices 80M via the primary treated liquid line 55 or both the backward passing liquid line 54 and the primary treated liquid line 55. A reverse osmosis membrane device downstream of a flow of the liquid to be treated has a tendency to have a larger amount of deposition of inorganic scale than a reverse osmosis membrane device upstream of a flow of the liquid to be treated. For this reason, a mode in which the acidic agent feeder can positively feed the acidic agent to the secondary liquid passing parts 91m of the main reverse osmosis membrane devices 80M downstream is more preferable than a mode in which the acidic agent feeder feeds the acidic agent to the primary liquid passing part(s) 91s of the sub-reverse osmosis membrane device(s) 80S upstream.

In the above embodiments, the seawater SW is fed to the sub-reverse osmosis membrane device(s) 80S via the strainer 12, the low pressure water feed pump 11, and the cartridge filter 13. However, for example, various units may be further added to the primary treatment system, for example, a sand filter may be provided between the strainer 12 and the low pressure water feed pump 11. On the contrary, the cartridge filter 13 or the like may be omitted from the primary treatment system. An installation order of the strainer 12, the low pressure water feed pump 11, the cartridge filter 13, the sand filter provided as needed, etc. may be appropriately changed. To be specific, for example, the low pressure water feed pump 11 may be disposed upstream from the strainer 12.

### [Industrial Applicability]

In an aspect of the present invention, a decrease in water treatment capability can be limited and water treatment can be performed over a long period of time.

### [Reference Signs List]

- 1: Controller
- 10, 10a, 10b, 10c: Primary treatment system
- 11: Low pressure water feed pump (low pressure water feeder)
- 12: Strainer
- 13: Cartridge filter
- 20, 20b: Disinfectant feeder
- 30, 30b: Acidic agent feeder
- 40, 40b: Backwashing unit
- 41: Backwashing liquid tank
- 42: Backwashing liquid line
- 42m: Backwashing liquid main line
- 42b: Backwashing liquid branch line
- 46: Backwashing liquid sluice valve
- 51: Liquid-to-be-treated suction line
- 52: Liquid-to-be-treated discharge line
- 52m: Liquid-to-be-treated discharge main line
- 52b: Liquid-to-be-treated branch line
- 54: Backward passing liquid line
- 55: Primary treated liquid line
- 56: Primary treated liquid suction line
- 56m: Primary treated liquid suction main line
- 56b: Primary treated liquid branch line
- 58, 58a: Cleaning liquid discharge line
- 61: Liquid-to-be-treated inflow sluice valve
- 62: Primary treated liquid sluice valve
- 63: Backwashing liquid sluice valve
- 64: Backward passing liquid sluice valve
- 70: Secondary treatment system
- 71: High pressure water feed pump (high pressure water feeder)
- 72: Permeated liquid pump
- 73: Primary treated liquid discharge line
- 74: Permeated liquid line
- 75m: Permeated liquid suction main line
- 75b: Permeated liquid suction branch lines
- 76: Permeated liquid discharge line
- 77: Permeated liquid feed line
- 78: Permeated liquid flow control valve
- 80: Reverse osmosis membrane device
- 80s: Sub-reverse osmosis membrane device
- 80m: Main reverse osmosis membrane device
- 81: Casing (primary casing, secondary casing)
- 82s: Liquid-to-be-treated inflow port
- 82m: Liquid-to-be-treated inflow port
- 83s: Primary treated liquid outflow port
- 83m: Secondary treated liquid outflow port
- 84s: Permeated liquid outflow port
- 84m: Permeated liquid outflow port
- 86s: Primary reverse osmosis membrane
- 86m: Secondary reverse osmosis membrane
- 89: Differential pressure gauge
- 91s: Primary liquid passing part
- 91m: Secondary liquid passing part
- 92s: Primary permeating part
- 92m: Secondary permeating part
- 97: Secondary treated liquid line
- 98: Concentrated liquid line
- SW: Seawater (liquid to be treated)
- W1: Primary treated liquid
- W2: Secondary treated liquid
- PW: Permeated liquid (freshwater)
- BW: Backwashing liquid

## Claims

1. A water treatment device comprising:
a sub-reverse osmosis membrane device having a primary casing and a primary reverse osmosis membrane dividing an inside of the primary casing into a primary liquid passing part and a primary permeating part;
a low pressure water feeder configured to feed a liquid to be treated, which is a treating target, to the primary liquid passing part at a pressure that is equal to or lower than an osmotic pressure of the liquid to be treated;
a main reverse osmosis membrane device having a secondary casing and a secondary reverse osmosis membrane dividing an inside of the secondary casing into a secondary liquid passing part and a secondary permeating part; and
a high pressure water feeder configured to feed a primary treated liquid, which is a resultant product of the liquid to be treated passing through the primary liquid passing part and flowing out from the primary liquid passing part, to the secondary liquid passing part at a pressure higher than an osmotic pressure of the primary treated liquid.

2. The water treatment device according to claim 1, further comprising:
a liquid-to-be-treated line along which the liquid to be treated from the low pressure water feeder is guided from a liquid-to-be-treated inflow port into the primary liquid passing part; and
a primary treated liquid line along which the primary treated liquid passing through the primary liquid passing part is guided from a primary treated liquid outflow port into the secondary liquid passing part via the high pressure water feeder,
wherein the primary casing is formed with the liquid-to-be-treated inflow port and the primary treated liquid outflow port, which communicate the primary liquid passing part and an outsidewith each other, and a permeated liquid outflow port, which communicates the primary permeating part and the outsidewith each other.

3. The water treatment device according to claim 2, further comprising:
a backwashing unit configured to feed a backwashing liquid whose solute concentration is lower than that of the liquid to be treated from the permeated liquid outflow port to the primary permeating part; and
a cleaning liquid discharge line configured to discharge a liquid containing the backwashing liquid, which is fed to the primary permeating part, passes through the primary reverse osmosis membrane, and reaches the primary liquid passing part, to the outside via the liquid-to-be-treated line or the primary treated liquid line.

4. The water treatment device according to claim 3, further comprising a switching unit configured to switch an operation state between a normal operation state, in which the liquid to be treated is fed from the liquid-to-be-treated line into the primary liquid passing part via the liquid-to-be-treated inflow port and the primary treated liquid fed from the primary liquid passing part is fed to the high pressure water feeder via the primary treated liquid line, and a backwashing state, in which the liquid containing the backwashing liquid, which is fed from the backwashing unit to the primary permeating part and reaches the primary liquid passing part via the primary reverse osmosis membrane, is discharged from the cleaning liquid discharge line to the outside via the liquid-to-be-treated line or the primary treated liquid line.

5. The water treatment device according to claim 4, wherein:
the cleaning liquid discharge line is connected to the liquid-to-be-treated line;
the water treatment device includes a backward passing liquid line that connects the liquid-to-be-treated line and the primary treated liquid line and guides the liquid to be treated passing through the liquid-to-be-treated line from the primary treated liquid outflow port to the primary liquid passing part via the primary treated liquid line;
the cleaning liquid discharge line is connected to the liquid-to-be-treated line at a position closer to the liquid-to-be-treated inflow port side than a position at which the backward passing liquid line is connected; and
the switching unit switches the operation state between the normal operation state and the backwashing state, in which the backwashing liquid from the backwashing unit is fed to the primary permeating part, the liquid to be treated is fed from the liquid-to-be-treated line into the primary liquid passing part via the backward passing liquid line, the primary treated liquid line, and the primary treated liquid outflow port, and the liquid to be treated and the backwashing liquid flowing out from the liquid-to-be-treated inflow port are discharged from the cleaning liquid discharge line to the outside.

6. The water treatment device according to claim 4 or 5, further comprising a controller configured to instruct the switching unit to switch from the normal operation state to the backwashing state when preset conditions are met.

7. The water treatment device according to claim 6, further comprising a differential pressure gauge configured to detect a pressure difference between a pressure in the liquid-to-be-treated line and a pressure in the primary treated liquid line at a position of the sub-reverse osmosis membrane device side that is closer thereto than the high pressure water feeder,
wherein the controller instructs the switching unit to switch from the normal operation state to the backwashing state when the pressure difference detected by the differential pressure gauge in the normal operation state is equal to or higher than a preset value.

8. The water treatment device according to any one of claims 3 to 7, wherein the backwashing unit has a backwashing liquid tank which is disposed at a higher position than the sub-reverse osmosis membrane device and in which the backwashing liquid is stored, and a backwashing liquid line that connects the backwashing liquid tank and the permeated liquid outflow port.

9. The water treatment device according to any one of claims 3 to 8, further comprising a permeated liquid feed line along which a permeated liquid, which is obtained by the primary treated liquid passing through the secondary reverse osmosis membrane of the main reverse osmosis membrane device, is fed to the backwashing unit as the backwashing liquid.

10. The water treatment device according to any one of claims 1 to 9, wherein the sub-reverse osmosis membrane device and the main reverse osmosis membrane device are the same type of reverse osmosis membrane device.

11. The water treatment device according to any one of claims 1 to 10, further comprising a disinfectant feeder configured to feed a disinfectant for killing organisms in the primary liquid passing part to the primary liquid passing part.

12. The water treatment device according to any one of claims 1 to 11, further comprising an acidic agent feeder configured to feed an acidic agent for removing scale in the secondary liquid passing part to the secondary liquid passing part.

13. The water treatment device according to any one of claims 3 to 10, further comprising a plurality of sub-reverse osmosis membrane devices including the sub-reverse osmosis membrane device,
wherein the liquid-to-be-treated line has a liquid-to-be-treated main line that is connected to the low pressure water feeder, and liquid-to-be-treated branch lines that respectively branch off from the liquid-to-be-treated main line to the plurality of sub-reverse osmosis membrane device and are respectively connected to the liquid-to-be-treated inflow ports of the sub-reverse osmosis membrane devices, and
the primary treated liquid line has a primary treated liquid main line that is connected to the high pressure water feeder, and primary treated liquid branch lines that respectively branch off from the primary treated liquid main line to the plurality of sub-reverse osmosis membrane device and are respectively connected to the primary treated liquid outflow ports of the sub-reverse osmosis membrane devices.

14. A method of operating a water treatment device including a plurality of reverse osmosis membrane devices, each of which has a casing and a reverse osmosis membrane dividing an inside of the casing into a liquid passing part and a permeating part, wherein the casing is formed with first and second ports that communicate the liquid passing part and an outside with each other and a third port that communicates the permeating part and the outside with each other, the method comprising:
a setting process of setting at least one of the plurality of reverse osmosis membrane device as a sub-reverse osmosis membrane device and the remaining reverse osmosis membrane devices as main reverse osmosis membrane devices;
a low-pressure water feeding process of feeding a liquid to be treated, which is a treating target, from the first port of the sub-reverse osmosis membrane device into the liquid passing part at a pressure that is equal to or lower than an osmotic pressure of the liquid to be treated; and
a high-pressure water feeding process of feeding a primary treated liquid, which is a resultant product of the liquid to be treated passing through the liquid passing part of the sub-reverse osmosis membrane device and flowing out from the second port, from the first ports of the main reverse osmosis membrane devices into the liquid passing parts of the main reverse osmosis membrane devices at a pressure higher than an osmotic pressure of the primary treated liquid.

15. The method according to claim 14, further comprising a backwashing process of feeding a backwashing liquid whose solute concentration is lower than that of the liquid to be treated from the third port of the sub-reverse osmosis membrane device to the permeating part and discharging a liquid containing the backwashing liquid, which passes through the reverse osmosis membrane of the sub-reverse osmosis membrane device and reaches the liquid passing part, to the outside.

16. The method according to claim 15, wherein the backwashing process feeds the liquid to be treated from the second port of the sub-reverse osmosis membrane device into the liquid passing part and discharges the liquid to be treated to the outside via the first port of the sub-reverse osmosis membrane device along with the backwashing liquid that reaches the liquid passing part of the sub-reverse osmosis membrane device.

17. The method according to claim 15 or 16, further comprising a switching process of switching an operation state between a normal operation state, in which the low-pressure water feeding process is performed to feed the liquid to be treated into the liquid passing part via the first port of the sub-reverse osmosis membrane device and the high-pressure water feeding process is performed to feed the primary treated liquid, which flows out from the liquid passing part of the sub-reverse osmosis membrane device via the second port of the sub-reverse osmosis membrane device, into the liquid passing part via the first ports of the main reverse osmosis membrane devices, and a backwashing state that is an operation state in which the backwashing process is performed.

18. The method according to claim 17, further comprising a pressure difference detecting process of detecting a pressure difference between a pressure of the liquid to be treated flowing in from the first port of the sub-reverse osmosis membrane device and a pressure of the primary treated liquid flowing out from the second port of the sub-reverse osmosis membrane device in the normal operation state,
wherein the switching process includes switching from the normal operation state to the backwashing state when the pressure difference detected in the pressure difference detecting process is equal to or higher than a preset value.

19. The method according to any one of claims 15 to 18, wherein the backwashing process includes using a permeated liquid, which is obtained by the primary treated liquid passing through the reverse osmosis membranes of the main reverse osmosis membrane devices, as the backwashing liquid.

20. The method according to any one of claims 15 to 19, wherein:
the water treatment device includes a plurality of sub-reverse osmosis membrane devices including the sub-reverse osmosis membrane device; and
the water treatment device performs the normal operation state in which, when the backwashing process is performed on a first sub-device group of at least one of the plurality of sub-reverse osmosis membrane devices, the liquid to be treated is fed into the liquid passing part via the first ports of a second sub-device group made up of the other sub-reverse osmosis membrane devices, and the primary treated liquid from the liquid passing part is fed to the main reverse osmosis membrane devices under pressure in the high-pressure water feeding process.
